(19) **Europäisches Patentamt**
**European Patent Office**
**Office européen des brevets**

(11) **EP 2 412 750 B1**

(12) **EUROPEAN PATENT SPECIFICATION**

(45) Date of publication and mention
of the grant of the patent:
**27.07.2016 Bulletin 2016/30**

(51) Int Cl.:
*C08J 5/18* *(2006.01)*   *B29C 47/00* *(2006.01)*
*B29K 105/00* *(2006.01)*   *B29K 67/00* *(2006.01)*
*B29L 7/00* *(2006.01)*   *B29C 47/88* *(2006.01)*

(21) Application number: **11175932.0**

(22) Date of filing: **29.07.2011**

(54) **METHOD OF PRODUCING POLYESTER SHEET AND METHOD OF PRODUCING POLYESTER FILM**

VERFAHREN ZUR HERSTELLUNG EINER POLYESTERFOLIE UND VERFAHREN ZUR HERSTELLUNG EINES POLYESTERFILMS

PROCÉDÉ DE PRODUCTION DE FEUILLE DE POLYESTER ET PROCÉDÉ DE PRODUCTION DE FILM DE POLYESTER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2010 JP 2010172333**

(43) Date of publication of application:
**01.02.2012 Bulletin 2012/05**

(73) Proprietor: **Fujifilm Corporation**
**Minato-ku**
**Tokyo (JP)**

(72) Inventors:
• **Kori, Junichi**
**Kanagawa (JP)**
• **Yamada, Akira**
**Kanagawa (JP)**
• **Shi, Zemin**
**Kanagawa (JP)**

(74) Representative: **Hoffmann Eitle**
**Patent- und Rechtsanwälte PartmbB**
**Arabellastraße 30**
**81925 München (DE)**

(56) References cited:
**EP-A1- 1 894 958    GB-A- 1 437 045**
**US-A- 4 110 395    US-A- 5 178 943**
**US-A1- 2004 024 102    US-A1- 2005 112 346**
**US-A1- 2010 063 234**

• **DATABASE WPI Week 200875 Thomson Scientific, London, GB; AN 2008-M71341 XP002711629, & JP 2008 239788 A (FUJI FILM CO LTD) 9 October 2008 (2008-10-09)**
• **DATABASE WPI Week 200642 Thomson Scientific, London, GB; AN 2006-414575 XP002711630, & WO 2006/057428 A1 (TEIJIN DUPONT FILMS JAPAN LTD) 1 June 2006 (2006-06-01)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The invention relates to a method of producing a polyester sheet and a method of producing a polyester film.

Description of the Related Art

Polyesters have been used for a variety of applications such as electrical insulation applications and optical applications. In particular, solar cell applications such as a solar cell back sheet have recently attracted attention as electrical insulation applications.

A solar cell is used in a form of a structure fabricated by embedding a power generation device in a sealing material such as an ethylene-vinyl acetate copolymer (EVA) and attaching the device to a glass plate. In order to protect the reverse side (side opposite to a sunlight-receiving side) of the solar cell against weather, a back sheet (reverse side-protecting member) is adopted. On a polyester film used in the back sheet is generally disposed an easy-adhesion layer for adhesion with EVA.

However, polyesters generally have large numbers of carboxyl groups or hydroxyl groups on surfaces thereof, which consequently results in the susceptibility of polyesters to hydrolysis under a humid environment and degradation of polyesters over time. The environment where solar cell modules are generally used is an environment which is always exposed to weather, such as the outdoors and is an environment which is susceptible to hydrolysis. Therefore, one of the important subjects in solar cell applications is to inhibit the hydrolysis of polyesters.

In addition, adhesion of a back sheet is deteriorated over a long period of time, and consequently the back sheet is readily peeled. Further, since a solar cell is generally used outdoors, a back sheet is required to have high adhesion (wet adhesion) even when it is exposed to a moisture-containing state and therefore improvement of adhesion is an important subject.

Solar cell back sheets are required to have high transparency, that is, low haze, for efficient transmission of sunlight and thickening of films for increasing a withstand voltage. However, thickening of polyester (for example, 3mm to 5mm) may result in unevenness of weather resistance (resistance to climate).

With regard to the above situations, for example, a biaxially stretched polyester film having a crystallization temperature on cooling of from 150°C to 200°C, a thickness of from 200μm to 500μm and a haze of 2.5% or less is disclosed as a low-haze polyester film (for example, see Japanese Patent Application Laid-Open (JP-A) No. 2007-185898). Further, for example, a method for producing a polyester film is disclosed which includes melt-extruding a polyester into a sheet having a thickness of 1500μm or greater, carrying out cooling solidification of the same on a casting drum by ejecting cold air of from 5°C to 50°C from air supply fan 14 such that the surface temperature of the sheet is lowered at an average cooling rate of from 350°C/min to 590°C/min in the range of from (cooling crystallization start temperature + 40°C) to (cooling crystallization end temperature - 40°C) of the polyester, thus producing a polyester sheet for a solar cell back sheet, and then subjecting the prepared polyester sheet to biaxial stretching (for example, see JP-A No. 2008-239788).

Further, for example, a method for producing a thermoplastic resin sheet is disclosed in which a molten thermoplastic resin sheet is cast to be sandwiched between an electrically-charged roll and a cooling medium, thereby carrying out film formation (for example, see JP-A No. 2000-263572). In order to improve adhesion with EVA, an easily adhesive polyester film for solar cell reverse face-protective film provided on a polyester film, which is formed by coating a film with a coating liquid containing polyvinyl alcohol(A) (for example, see JP-A No. 2006-335853), and a polyester film in which a coat layer adherent to the polyolefin resin is formed on at least one side of the film when the film is formed (for example, see JP-A No. 2006-175764), are disclosed. Further, in order to improve adhesion with a water soluble or hydrophilic resin, an easily adhesive polyester film provided on at least one side with an easily adhesive layer which contains a self-crosslinking polyurethane resin as a main component and has specific values of physical properties such as a haze, a thermal shrinkage percentage and the like (for example, see JP-A No. 2009-269301) is disclosed.

US-A-2010/063234 discloses a method for production of a polyester resin film comprising melt extruding a polyester resin into a sheet shape, cooling and solidifying the polyester resin sheet on a casting drum, then longitudinally stretching the polyester resin sheet in a longitudinal direction, and then passing the longitudinally stretched polyester resin film through a transverse stretching apparatus to transversely stretch the longitudinally stretched polyester resin film in a transverse direction.

SUMMARY OF THE INVENTION

According to an aspect of the invention, a method for producing a polyester sheet including: melt-extruding a polyester having a half-value width of a crystallization temperature on cooling of 25°C to 50°C; and cooling the melt-extruded polyester such that a surface temperature of the polyester is lowered at a rate of 350°C/min to 590°C/min, wherein the polyester sheet has a thickness of 3mm to 5mm and excellent inhibition of crystallization, a polyester film and a method for producing the polyester film, are provided.

[Problems to be Addressed by the Invention]

However, the production methods disclosed in the above-described JP-A Nos. 2007-185898, 2008-239788 and 2000-263572 have difficulty in sufficiently inhibiting the hydrolysis of polyesters due to the environment where polyesters are placed, and exhibit unevenness in terms of weather resistance.

An object of the invention is to provide a method for producing a polyester sheet by which a polyester sheet with inhibition of crystallization is obtained, and a method for producing a polyester film by which a polyester film excellent in terms of suppressing weather resistance unevenness is obtained. Therefore, the invention is intended to achieve the above object.

[Solution to Problem]

According to a first aspect, the present invention provides a method for producing a polyester sheet having a thickness of from 3mm to 5mm comprising the steps of:

melt-extruding a polyester having a half-value width of the crystallization temperature on cooling of from 25°C to 50°C; and
cooling the melt-extruded polyester such that the surface temperature of the polyester, measured using a radiation thermometer, is lowered at a rate of from 350°C/min to 590°C/min,

wherein the half-value width of the crystallization temperature on cooling of the polyester is measured by:

(i) setting a weighed 10mg sample of a polyester sheet in an aluminum pan, and measuring the heat flow in response to changes in temperature at a rate of temperature increase of 10°C/min from room temperature to a final temperature of 300°C, using a differential scanning calorimetry manufactured by Shimadzu Corporation;
(ii) after reaching a final temperature of 300°C, the sample is not maintained at that temperature and lowered to a final temperature of 60°C at a rate of temperature decrease of -10°C/min; and
(iii) the apex temperature of the convex-shaped exothermic peak detected during the lowering of the temperature from 300°C to 60°C is taken as the cooling crystallization temperature (Tc), and when the DSC curve is drawn by plotting the heat flow of the sample from the high-temperature side to the low-temperature side, the half-value width is defined as the temperature width between the temperature where the peak begins from the baseline of the DSC curve due to heat generation/absorption and the temperature where heat generation/absorption disappears and reaches the baseline.

Preferably the half-value width of the crystallization temperature on cooling of the polyester is from 25°C to 40°C, more preferably from 30 to 37°C.
Preferably the crystallization temperature on cooling of the polyester is from 160°C to 220°C.
Preferably the melt-extruded polyester is cooled using a cooling cast drum and peeling the cooled polyester from the cooling cast drum when its surface temperature satisfies the following Equation (1):

$$\text{Equation (1)} \quad Tg-10<TL<Tg$$

wherein, in Equation (1), TL represents the surface temperature of the cooled polyester, and Tg represents the glass transition temperature (°C) of the polyester measured by setting a weighed 10mg sample of a polyester sheet in an aluminum pan, and measuring the heat flow in response to changes in temperature at a rate of temperature increase of 10°C/min from room temperature to a final temperature of 300°C using a differential scanning calorimetry (DSC) apparatus, the temperature at which the DSC curve is bent being taken as the glass transition temperature.
Preferably the melt-extruded polyester is cooled using a cooling cast drum and peeling the cooled polyester from the cooling cast drum when its surface temperature satisfies Tg-5<TL<Tg.

Preferably the peeling of the cooled polyester from the cooling cast drum is carried out using a peeling roll which is disposed opposite to the cooling cast drum and has a roll diameter satisfying the following Equation (2):

$$\text{Equation (2)} \quad (D1/D2)<7$$

wherein, in Equation (2), D1 represents the roll diameter of the cooling cast drum and D2 represents the roll diameter of the peeling roll.

Preferably the polyester has an intrinsic viscosity (IV) of from 0.7 to 0.9 determined by extrapolating the value of specific viscosity ($\eta_{sp}=\eta_r-1$) divided by the concentration, which is obtained by subtracting 1 from a ratio $\eta_r(=\eta/\eta_0;$ relative viscosity) of a solution viscosity ($\eta$) and a solvent viscosity ($\eta_0$), with respect to concentration, to a state where the concentration is zero, IV being calculated from a solution viscosity at 25°C after dissolving the polyester in a mixed solvent of 1,1,2,2-tetrachloroethane and phenol in a mass ratio of 2:3 using a Ubbelohde viscometer.

Preferably the polyester comprises catalyst-derived titanium atoms such as from an organic chelated titanium complex.

Preferably the polyester comprises from 0.005 % by mole to 2.5% by mole of a polyfunctional monomer in which the total (a+b) of the carboxylic group number (a) and the hydroxyl group number (b) is 3 or more.

Preferably the melt-extruding comprises adding from 0.1% by mass to 5% by mass of at least one terminal sealing agent selected from an oxazoline compound, a carbodiimide compound and an epoxide compound, with respect to the total mass of the polyester.

According to a second aspect, the present invention provides a method of producing a polyester film comprising:

producing a polyester sheet by a method in accordance with the above first aspect; and
stretching the polyester sheet to produce a polyester film having a thickness of from 250 to 500 $\mu$m.

[Effects of the Invention]

According to an exemplary embodiment of the invention, it is possible to provide a method for producing a polyester sheet for a solar cell back sheet by which a polyester sheet with inhibition of crystallization is obtained and a method for producing a polyester film for a solar cell back sheet by which a polyester film excellent in terms of weather resistance unevenness is obtained.

DETAILED DESCRIPTION OF THE INVENTION

<Method for producing polyester sheet>

The method for producing a polyester sheet according to the invention has a configuration including an extruding step of melt-extruding a polyester having a half-value width of a crystallization temperature on cooling of from 25°C to 50°C and a cooling step of cooling the melt-extruded polyester such that a surface temperature of the polyester is lowered at a rate of from 350°C/min to 590°C/min.

The invention uses a polyester having a half-value width of a crystallization temperature on cooling of from 25°C to 50°C as a raw material for the polyester sheet and produces a polyester sheet having a thickness of from 3mm to 5mm by subjecting the polyester to the extruding step and the cooling step as described above.

As used herein, the term "polyester sheet" refers to an unstretched polyester having a thickness of 3mm to 5mm.

Although the reason why a polyester sheet with inhibited crystallization is produced through the above-designed configuration of the method for producing a polyester sheet according to the invention is not fully understood, it is believed to be due to the following grounds.

During the process of melting a polyester serving as a raw material for a polyester sheet (in some case, also referred to as a raw material polyester) and molding the polyester into a sheet using an extruder, the crystallization takes place when a molten-state polyester (hereinafter, also referred to as "molten resin") is cooled. It is believed that the crystallization takes place in such a manner that spherocrystals are generated during cooling of a molten resin and the spherocrystals becomes nuclei, whereby crystal nuclei are placed in an environment where crystals readily grow and, as a result, crystals rapidly grow. The term "environment where crystals readily grow" refers to an environment in which a polyester readily exhibits molecular motion. The environment may be controlled by means of temperature or the viscosity of polyester. It is believed that a polyester is prone to molecular motion and is liable to become crystalline as the temperature of the polyester increases and the viscosity of the polyester decreases.

On the other hand, it is believed that the formation of spherocrystals becomes difficult by using a polyester having a large half-value width of a crystallization temperature on cooling of from 25°C to 50°C. Further, it is believed that a crystal-growing rate is easily lowered by cooling a molten resin such that the surface temperature of the resin is lowered at a rate of from 350°C/min to 590°C/min. It is believed that because a lowering of the crystal-growing rate results in a temperature environment where crystals do not readily grow, the growth of crystals is inhibited even if spherocrystals serving as crystal nuclei are formed, and consequently it becomes difficult for the crystallization to occur.

Hereinafter, details of the method for producing a polyester sheet according to the invention will be described according to a polyester and individual steps including an extruding step and a cooling step.

[Extruding step]

The extruding step is a step of melt-extruding a polyester having a half-value width of a crystallization temperature on cooling of from 25°C to 50°C.

For example, a polyester may be dried, melted and then extruded into a sheet through an extruder, a filter and a die.

In the extrusion process is preferably contained a addition process of at least one of terminal sealing agents of oxazoline compounds, carbodiimide compounds and epoxy compounds to the polyester.

The melting temperature of a polyester is preferably in the range of from 250°C to 320°C, more preferably from 260°C to 310°C, and even more preferably from 270°C to 300°C.

The extruder may be monoaxial or polyaxial. From the viewpoints of inhibiting the generation of terminal COOH due to thermolysis and inhibiting the hydrolysis of polyester, it is preferable that the inside of an extruder is purged with nitrogen, followed by melt extrusion of a polyester.

The temperature of the inside of an extruder (piping into which a molten resin is introduced) is set to, for example, the range of from a temperature 10°C above the melting point (Tm) of a polyester serving as a raw material to a temperature 50°C above Tm of the polyester, that is, the range of from $Tg+10°C$ to $Tg+50°C$.

The molten resin (melt) is extruded from an extrusion die through a gear pump, a filter and the like. At this time, the molten resin may be extruded into a monolayer or multilayer.

The molten resin extruded from a die is set to have a thickness of from 3mm to 5mm, preferably from 3.2mm to 4.7mm, and more preferably from 3.4mm to 4.6mm. When the thickness of the molten resin is 5mm or less, the cooling rate of the molten resin may be set to the numerical range which will be described hereinafter. When the thickness of the extruded molten resin is 3mm or greater, this inhibits the exposure of OH groups and COOH groups to the polyester surface. During extrusion to cooling, such OH groups or COOH groups in the polyester are diffused to the polyester inside and are therefore responsible for the occurrence of hydrolysis. Further, when the produced polyester sheet is stretched into a polyester film, a biaxially stretched polyester film having a thickness of $100\mu m$ or greater is obtained even if a stretching ratio is increased.

Further, the melt-extruded polyester has a half-value width of a crystallization temperature on cooling of from 25°C to 50°C.

Here, it is preferable that the polyester (molten resin) when being melt-extruded from an extruder has a physical property corresponding to a half-value width of a crystallization temperature on cooling of from 25°C to 50°C. That is, even when a raw material polyester does not have a physical property corresponding to a half-value width of a crystallization temperature on cooling of from 25°C to 50°C before introduction of the raw material polyester into an extruder, it is sufficient that the polyester has a physical property corresponding to a half-value width of a crystallization temperature on cooling of from 25°C to 50°C, when the polyester melts, passes through the extruder and is extruded from an extrusion die.

When the half-value width of a crystallization temperature on cooling of the melt-extruded polyester is within the above-specified range, the crystallization is inhibited in a cooling step which will be described hereinafter. More specifically, when the half-value width of a crystallization temperature on cooling is 25°C or higher, the occurrence of spherocrystals may be inhibited in a cooling step, and when the half-value width of a crystallization temperature on cooling is 50°C or lower, the growth of crystals is inhibited.

As used herein, the term "crystallization temperature on cooling" refers to an apex temperature of the obtained exothermic peak, on the coordinate system plotted by taking a heat flow on the ordinate and temperature on the abscissa, when measuring a heat flow of a molten resin while cooling the molten resin, using a differential scanning calorimetry (DSC) manufactured by Shimadzu Corporation. The crystallization temperature on cooling is also referred to as Tc. The term "half-value width of a crystallization temperature on cooling (Tc)" refers to a peak width of the exothermic peak.

Details of the method for measuring a half-value width are as follows.

(1) 10mg of a polyester sheet is weighed as a sample, set in an aluminum pan, and subjected to the measurement of a heat flow in response to changes in temperature at a rate of temperature increase of 10°C/min from room temperature to a final temperature of 300°C, using a differential scanning calorimetry manufactured by Shimadzu Corporation.

(2) After reaching a final temperature of 300°C, the sample is not maintained at that temperature and lowered to a final temperature of 60°C at a rate of temperature decrease of -10°C/min.

(3) An apex temperature of the convex-shaped exothermic peak detected during the lowering of a temperature from 300°C to 60°C is taken as a cooling crystallization temperature (Tc), and a width of the exothermic peak is taken as a half-value width. More specifically, when a DSC curve is drawn by plotting a heat flow of a sample from a high-temperature side to a low-temperature side, the half-value width is defined as a temperature width between the temperature where a peak begins from a baseline of the DSC curve due to heat generation/absorption and the temperature where heat generation/absorption disappears and reaches the baseline.

The half-value width of a crystallization temperature on cooling (Tc) is preferably in the range of from 25°C to 40°C, and more preferably from 30°C to 37°C.

Further, the crystallization temperature on cooling is preferably in the range of from 160°C to 220°C. When the crystallization temperature on cooling is 160°C or higher, a cooling rate may be increased (a temperature difference with a cooling medium is small at lower temperature, so a high cooling rate may be not achieved). When the crystallization temperature on cooling is 220°C or lower, the initiation of crystallization may be delayed. The crystallization temperature on cooling is more preferably in the range of from 170°C to 210°C.

The half-value width of a crystallization temperature on cooling of the melt-extruded polyester may be controlled, for example, by applying a change, such as pressure change, to a molten resin in an extruder. Specifically, the molten resin-extruding pressure, that is, the back pressure, may be changed, the temperature distribution of the molten resin may be changed by changing the internal temperature of the extruder or the screw revolution rate of the extruder may be changed.

Further, when the half-value width is set in the range of from 25°C to 50°C by changing the back pressure, the temperature distribution, the screw revolution rate or the like, thermolysis products are readily generated in the molten resin. It is thought that if thermolysis products are incorporated into the molten resin, crystals do not readily grow even with development of spherocrystals in the molten resin, and consequently the crystallization of a polyester sheet is inhibited.

Specifically, by changing a pressure or a temperature as follows, the half-value width of a crystallization temperature on cooling of the molten resin is easily set to the range of from 25°C to 50°C. When the numerical range of changes in pressure or temperature provided below is smaller than the lower limit, the half-value width of a crystallization temperature on cooling is not readily set to 25°C. On the other hand, when such a numerical range is larger than the upper limit, the thermolysis of the molten resin excessively takes place, which may accelerate the crystallization of polyester.

The back pressure is preferably changed by pressurizing within the range of from 0.5% to 1.5%, relative to an average pressure in an extruder barrel. The back pressure change is more preferably in the range of from 0.8% to 1.1%.

The temperature distribution of the molten resin is preferably changed by heating within the range of from 0.5% to 4%, relative to an average temperature in an extruder barrel. The temperature change is more preferably in the range of from 0.8% to 2.5%.

For controlling the half-value width of a crystallization temperature on cooling of a polyester, any one of a back pressure, a temperature distribution and a screw revolution may be changed or a combination of two or more thereof may be changed.

Next, the melt-extruded polyester is cooled.

[Cooling step]

The cooling step is a step of cooling the melt-extruded polyester such that the surface temperature of the polyester is lowered at a rate of from 350°C/min to 590°C/min.

The surface temperature of the polyester is measured by using a radiation thermometer such as D65205 DOCTOR HEIMANN RADIATION THERMOMETER (trade name, manufactured by HEITRONICS Infrarot Messtechnik GmbH).

If the cooling rate is 350°C/min or less, this results in crystallization of the polyester. If the cooling rate is higher than 590°C/min, this results in a difference between the cooling rate of the surface of polyester and the cooling rate of the inside of the polyester.

When there is a difference between the cooling rate of the surface of the polyester and the cooling rate of the inside of the polyester, this results in unevenness in stretchability of the resulting polyester sheet and consequently weather resistance of the polyester film obtained by stretching a polyester sheet is deteriorated.

The cooling rate of the molten resin is preferably in the range of from 370°C/min to 550°C/min and more preferably from 400°C/min to 500°C/min.

There are no particular limitations on the means for cooling the molten resin extruded from an extrusion die. For example, cold air may be applied to the molten resin, the molten resin may be brought into contact with a cooling cast drum, or water may be sprayed to the molten resin. Cooling may be carried out using a single cooling means or a combination of two or more cooling means.

Among these, at least one of cooling using cold air and cooling using a cooling cast drum is preferable as the cooling means, from the viewpoints of preventing adhesion of oligomers to the sheet surface during the continuous operation. Further, it is particularly preferable that the molten resin extruded from an extruder is cooled with cold air and the molten resin is cooled while being brought into contact with a cooling cast drum.

For cooling by cold air, the cold air temperature is preferably in the range of from 15°C to 50°C, more preferably from 18°C to 40°C, and even more preferably from 20°C to 35°C. The air velocity is preferably in the range of from 20m/sec to 70m/sec, more preferably from 40m/sec to 65m/sec, and even more preferably from 50m/sec to 60m/sec.

The temperature of the cooling cast drum is preferably in the range of from -10°C to 30°C, more preferably from -5°C to 25°C, and even more preferably from 0°C to 15°C. From the viewpoints of enhancing cooling efficiency by increasing adhesion between the molten resin and the cooling cast drum, static electricity is preferably applied to a cooling cast drum before the cooling cast drum is brought into contact with the molten resin. By means of a cooling medium in the inside of the cooling cast drum, the cooling cast drum may be controlled to a predetermined surface temperature.

If the molten resin is cooled using a cooling cast drum, it is preferable to peel the molten resin from the cooling cast drum when the surface temperature of the cooled polyester sheet is a temperature satisfying the following Equation (1).

$$\text{Equation (1)} \quad Tg-10 < TL < Tg \ \ldots\ldots$$

[In Equation (1), Tg represents a glass transition temperature (°C) of the polyester and TL represents a surface temperature of the cooled polyester]

That is, when the surface temperature TL of the cooled polyester sheet becomes lower than the glass transition temperature Tg of the polyester, it is preferable to peel the polyester sheet from the cooling cast drum. Further, it is preferable to peel the polyester sheet from the cooling cast drum before the surface temperature TL of the cooled polyester sheet becomes equal to or lower than a temperature 10°C lower than the glass transition temperature Tg of the polyester.

When the surface temperature TL of the cooled polyester sheet is below the glass transition temperature Tg of the polyester, the polyester sheet is sufficiently solidified to decrease flexibility and therefore possible damage such as partial elongation of the polyester sheet during peeling thereof can be inhibited. When peeling of the polyester sheet is carried out at a temperature higher than the temperature where the surface temperature TL of the cooled polyester sheet is 10°C lower than the glass transition temperature Tg of the polyester, possible defects such cracking of the polyester sheet can be inhibited.

There are no particular limitations on the glass transition temperature (Tg) of a polyester that is a raw material of the polyester sheet. Tg of the polyester is preferably in the range of from 65°C to 80°C and more preferably from 70°C to 80°C.

The relationship between the glass transition temperature Tg of the polyester and the surface temperature TL of the cooled polyester sheet preferably satisfies the following equation (1-2).

$$\text{Equation (1-2)} \quad Tg-5 < TL < Tg$$

[In Equation (1-2), Tg represents a glass transition temperature (°C) of the polyester and TL represents a surface temperature of the cooled polyester]

That is, it is preferable that TL is higher than Tg-5 and lower than Tg.

Peeling of the cooled polyester from the cooling cast drum is preferably carried out using a peeling roll which is disposed opposite to the cooling cast drum.

When the cooled polyester is peeled from the cooling cast drum using a peeling roll, peeling of the cooled polyester is possible without the application of tensile stress that is biased to the cooled polyester and, consequently, damage to the cooled polyester dose not readily occur.

The roll diameter of the peeling roll is preferably a size satisfying the following Equation (2) in relation to the roll diameter of the cooling cast drum.

$$(D1/D2){<}7 \ldots\ldots \text{Equation (2)}$$

[In Equation (2), D1 represents a roll diameter of the cooling cast drum and D2 represents a roll diameter of the peeling roll]

Further, the roll diameter of the peeling roll is preferably a size satisfying the following Equation (2-2) in relation to the roll diameter of the cooling cast drum.

$$3{\leq}(D1/D2){<}7 \ldots\ldots \text{Equation (2-2)}$$

[In Equation (2-2), D1 represents a roll diameter of the cooling cast drum, and D2 represents a roll diameter of the peeling roll]

When D1/D2 is 3 or greater, a polyester can be peeled along the peeling roll without being biased, during peeling of the cooled polyester from the cooling cast drum.

A glass transition temperature of a polyester is measured by using a differential scanning calorimetry (DSC) manufactured by Shimadzu Corporation.

Specifically, when 10 mg of a polyester sheet is weighed as a sample, set in an aluminum pan, and subjected to the measurement of a heat flow in response to changes in temperature at a rate of temperature increase of 10°C/min from room temperature to a final temperature of 300°C, using a DSC apparatus, the temperature at which a DSC curve is bent is taken as a glass transition temperature. Further, the melting point (melting temperature) Tm of polyester is calculated as a temperature at the peak point of a concave-shaped endothermic peak obtained in the DSC curve.

[Polyester sheet]

Using the method for producing a polyester sheet according to the invention, a polyester sheet having a thickness of 3mm to 5mm is produced.

In order to produce a polyester sheet having a thickness of more than 5mm, a molten resin having a thickness of more than 5mm is extruded and is required to be cooled. In this case, the cooling rate of the molten resin is decreased and therefore the crystallization of the polyester cannot be inhibited.

If the thickness of a polyester sheet is less than 3mm, the polyester sheet has a difficulty in exhibiting an electrical insulation property and therefore is not suitable for use in a solar cell back sheet.

From the viewpoints of crystallization inhibition and an electrical insulation property, the thickness of a polyester sheet is preferably in the range of from 3.2mm to 4.7mm and more preferably from 3.4mm to 4.6mm.

Next, a description will given of polyester which is a raw material used in the method for producing a polyester sheet according to the invention.

[Raw material of polyester sheet (polyester)]

The polyester as a raw material of a polyester sheet (a raw polyester) is required to have a half-value width of a crystallization temperature on cooling of from 25°C to 50°C when it is melt-extruded from an extruder. As described above, since the half-value width of a crystallization temperature on cooling of a polyester may be controlled by pressure change or the like in the extruder during the melt extrusion of the polyester, there are no particular limitations on the kind of polyester as long as the half-value width of a crystallization temperature on cooling may be controlled to be in the range of from 25°C to 50°C by pressure change or the like in the extruder. The polyester may be synthesized using polybasic carboxylic acid components (for example, dicarboxylic acid components) and polyol components (for example, diol components) or may be a commercially available polyester.

When polyester is synthesized, the polyester may be obtained, for example, by subjecting (A) dicarboxylic acid components and (B) diol components to an esterification reaction and/or transesterification reaction, according to a known method.

Examples of (A) dicarboxylic acid components include dicarboxylic acids or ester derivatives thereof, e.g. aliphatic dicarboxylic acids such as malonic acid, succinic acid, glutaric acid, adipic acid, suberic acid, sebacic acid, dodecanedioic acid, dimer acid, eicosanedioic acid, pimelic acid, azelaic acid, methylmalonic acid, and ethylmalonic acid; cycloaliphatic dicarboxylic acids such as adamantanedicarboxylic acid, norbornene dicarboxylic acid, isosorbide, cyclohexane dicarboxylic acid, and decalin dicarboxylic acid; aromatic dicarboxylic acids such as terephthalic acid, isophthalic acid, phthalic acid, 1,4-naphthalene dicarboxylic acid, 1,5-naphthalene dicarboxylic acid, 2,6-naphthalene dicarboxylic acid, 1,8-naphthalene dicarboxylic acid, 4,4'-diphenyl dicarboxylic acid, 4,4'-diphenylether dicarboxylic acid, 5-sodium sulfoisophthalic acid, phenylindane dicarboxylic acid, anthracene dicarboxylic acid, phenanthrene dicarboxylic acid, and 9,9'-bis(4-carboxyphenyl) fluorenic acid; and the like.

Examples of (B) diol components include diol compounds, e.g. aliphatic diols such as ethylene glycol, 1,2-propanediol, 1,3-propanediol, 1,4-butanediol, 1,2-butanediol, and 1,3-butanediol; cycloaliphatic diols such as cyclohexane dimethanol, spiroglycol, and isosorbide; aromatic diols such as bisphenol A, 1,3-benzene dimethanol, 1,4-benzene dimethanol, and 9,9'-bis(4-hydroxyphenyl) fluorene; and the like.

As the (A) dicarboxylic acid component, at least one of aromatic dicarboxylic acids is preferably used. More preferably, among the dicarboxylic acid components, an aromatic dicarboxylic acid is contained as a main component. As used herein, the term "main component" means that the proportion accounted for by aromatic dicarboxylic acid in the dicarboxylic acid component is 80% by mass or greater. Dicarboxylic acid components other than the aromatic dicarboxylic acid may be incorporated. Examples of these dicarboxylic acid components include ester derivatives such as aromatic dicarboxylic acids.

As the (B) diol component, at least one of aliphatic diols is preferably used. The (B) diol component may include ethylene glycol as an aliphatic diol and preferably contains ethylene glycol as a main component. As used herein, the term "main component" means that the proportion accounted for by ethylene glycol in the diol component is 80% by mass or greater.

The amount of the aliphatic diol (for example, ethylene glycol) used is preferably in the range of from 1.015 moles to 1.50 moles based on 1 mole of the aromatic dicarboxylic acid (for example, terephthalic acid) and an optional ester derivative thereof. The amount used is more preferably in the range of from 1.02 moles to 1.30 moles, and even more preferably in the range of from 1.025 moles to 1.10 moles. When the amount used is in the range of 1.015 moles or greater, the esterification reaction proceeds satisfactorily, and when the amount used is in the range of 1.50 moles or less, for example, side production of diethylene glycol due to the dimerization of ethylene glycol is suppressed, and many properties such as melting point, glass transition temperature, crystallinity, heat resistance, hydrolysis resistance and weather resistance can be maintained to be adequate.

(Polyfunctional Monomer)

In the polyester that is a raw material used in the method of producing a polyester sheet of the present invention is preferably contained a polyfunctional monomer, in which a total (a+b) of carboxylic groups (a) and hydroxyl groups (b) is 3 or more (in some case, it is referred to as "polyfunctional monomer of trifunctional or higher functional" or merely "polyfunctional monomer"). The polyester containing a polyfunctional monomer excels in adhesion with adjacent materials to the polyester sheet or the polyester film which is produced by stretching the polyester sheet. Examples of the djacent materials to the polyester sheet or the polyester film include a coat layer which is formed by coating a coating solution onto the polyester sheet or the polyester film, a laminating member to the polyester sheet or the polyester film and the like.

The polyester that is a raw material of the polyester sheet preferably contains a polyfunctional monomer as a co-condensation (copolymerization) component (trifunctional or higher functional component). The expression "containing a polyfunctional monomer as a co-condensation (copolymerization) component (trifunctional or higher functional component)" means "containing a constitutive component derived from the polyfunctional monomer".

The polyester is synthesized by a known method, for example, esterification reaction and/or transesterification reaction of a dicarboxylic acid component (A) with a diol component (B), and preferably further copolymerizing the polyfunctional monomer of trifunctional or higher functional therewith.

Examples of the polyfunctional monomer in which a total (a+b) of carboxylic groups (a) and hydroxyl groups (b) is 3 or more include, but are not limited to, trifunctional aromatic carboxylic acids such as trimesic acid, trimellitic acid, pyromellitic acid, naphthalene tricarboxylic acid, and anthracene tricarboxylic acid; trifunctional aliphatic carboxylic acids such as methane tricarboxylic acid, ethane tricarboxylic acid, propane tricarboxylic acid, and butane tricarboxylic acid; tetrafunctional aromatic carboxylic acids such as benzene tetracarboxylic acid, benzophenone tetracarboxylic acid, naphthalene tetracarboxylic acid, anthracene tetracarboxylic acid, and perylene tetracarboxylic acid; tetrafunctional aliphatic carboxylic acids such as ethane tetracarboxylic acid, ethylene tetracarboxylic acid, butane tetracarboxylic acid, cyclopentane tetracarboxylic acid, cyclohexane tetracarboxylic acid, and adamantane tetracarboxylic acid; pentafunctional or higher functional aromatic carboxylic acids such as benzene pentacarboxylic acid, benzene hexacarboxylic acid, naphthalene pentacarboxylic acid, naphthalene hexacarboxylic acid, naphthalene heptacarboxylic acid, naphthalene octacarboxylic acid, anthracene pentacarboxylic acid, anthracene hexacarboxylic acid, anthracene heptacarboxylic acid, and anthracene octacarboxylic acid; pentafunctional or higher functional aliphatic carboxylic acids such as ethane pentacarboxylic acid, ethane hexacarboxylic acid, butane pentacarboxylic acid, butane heptacarboxylic acid, cyclopentane pentacarboxylic acid, cyclohexane pentacarboxylic acid, cyclohexane hexacarboxylic acid, adamantine pentacarboxylic acid, and adamantane hexacarboxylic acid; and the like.

In the exemplary embodiments of the invention, examples of the polyfunctional monomer also include ester derivatives and acid anhydrides thereof.

Further, adducts are also preferably used in which 1-lactide, d-lactide, oxy acids such as hydroxybenzoic acid, and derivatives thereof or oxy acids thereof are plurally attached to the carboxyl terminal of the above-mentioned carboxylic acid constitutive components. These may be used alone or in any combination thereof.

Examples of the polyfunctional monomers in which the hydroxyl group number (b) is 3 or more include trifunctional aromatic compounds such as trihydroxy benzene, trihydroxy naphthalene, trihydroxyanthracene, trihydroxychalcone, trihydroxyflavone, and trihydroxycoumarin; trifunctional aliphatic alcohols such as glycerin, trimethylol propane, and propane triol; and tetrafunctional aliphatic alcohols such as pentaerythritol and the like. In addition, compounds in which diols are added to the terminal hydroxyl group of the above-mentioned compounds are also preferably used. These may be used alone or in any combination thereof if necessary.

Examples of other polyfunctional monomers include oxy acids in which a hydroxyl group(s) and a carboxylic group(s) are present in a molecule and a total (a+b) of the carboxylic group number (a) and the hydroxyl group number (b) is 3 or more. Examples of the oxy acids include hydroxyisophthalic acid, hydroxyterephthalic acid, dihydroxyterephthalic acid, trihydroxyterephthalic acid, and the like. Further, adducts are also preferably used in which 1-lactide, d-lactide, oxy acids such as hydroxybenzoic acid, and derivatives thereof or oxy acids thereof are plurally attached at the terminal carboxyl group of the above-mentioned polyfunctional monomer. These may be used alone or in any combination thereof if necessary.

In the polyester of a raw material of the polyester sheet of the present invention, the content of the polyfunctional monomer is preferably from 0.005 mol% to 2.5 mol% with respect to the total mole of the monomer in the polyester, more preferably from 0.020 mol% to 1 mol%, still more preferably from 0.025 mol% to 1 mol%, further preferably from 0.035 mol% to 0.5 mol%, further still preferably from 0.05 mol% to 0.5 mol%, and particularly preferably from 0.1 mol% to 0.25 mol%.

Due to the presence of the polyfunctional monomer of trifunctional or higher functional in the polyester film substrate, a branched structure of a polymer chain in the polyester derived from the polyfunctional monomer of trifunctional or higher is formed and entanglement of molecules of the polyester may be increased when a polyester film is finally formed.

The polyfunctional monomer may be added during polycondensation reaction, that is in an esterification reaction process of dicarboxylic acid component(s) with diol component(s).

A conventionally known reaction catalyst may be used in the esterification reaction and/or transesterification reaction. Examples of the reaction catalyst include an alkali metal compound, an alkaline-earth metal compound, a zinc compound, a lead compound, a manganese compound, a cobalt compound, an aluminum compound, an antimony compound, a titanium compound, and a phosphorus compound. Conventionally, an antimony compound, a germanium compound or a titanium compound as a polymerization catalyst is preferably added to any step before a method for producing polyester is completed. As such a method, for example, when a germanium compound is used, a germanium compound powder is preferably added as it is.

For example, the esterification reaction step polymerizes an aromatic dicarboxylic acid and an aliphatic diol in the presence of a catalyst containing a titanium compound. This esterification reaction step uses, as a titanium compound which is a catalyst, an organic chelated titanium complex which has an organic acid as a ligand, and at least includes adding an organic chelated titanium complex, a magnesium compound, and a pentavalent phosphoric acid ester having no aromatic ring as a substituent in this order during the reaction step.

First, an aromatic dicarboxylic acid and an aliphatic diol are mixed with a catalyst containing an organic chelated titanium complex, which is a titanium compound, prior to the addition of a magnesium compound and a phosphorus compound. Since a titanium compound such as an organic chelated titanium complex has a high catalytic activity even in esterification reactions, the esterification reaction can be carried out satisfactorily. In this case, the titanium compound may be added to a mixture of a dicarboxylic acid component and a diol component, or a dicarboxylic acid component (or a diol component) and a titanium compound may be mixed, and then a diol component (or a dicarboxylic acid component) may be incorporated into the mixture. Furthermore, the dicarboxylic acid component, the diol component and the titanium compound may be simultaneously mixed. There are no particular limitations on the method of mixing, and any conventionally known method can be used to perform mixing.

A more preferable polyester is polyethylene terephthalate (PET) or polyethylene -2,6-naphthalate (PEN), and an even more preferable polyester is PET. PET is preferably polymerized using one or two or more kinds selected from a germanium (Ge)-based catalyst, an antimony (Sb)-based catalyst, an aluminum (Al)-based catalyst and a titanium (Ti)-based catalyst, and more preferably a Ti-based catalyst.

The Ti-based catalyst has a high reaction activity and can lower the polymerization temperature. For this reason, it is possible to inhibit the generation of COOH due to thermolysis of PET particularly during the polymerization reaction, and the Ti-based catalyst is preferable for adjusting the amount of terminal COOH to a predetermined range in the polyester film of the invention.

Examples of the Ti-based catalyst include an oxide, a hydroxide, an alkoxide, a carboxylate, a carbonate, an oxalate, an organic chelated titanium complex and a halide. As the Ti-based catalyst, a combination of two or more titanium compounds may be used as long as the effects of the invention are not impaired.

Examples of the Ti-based catalyst include titanium alkoxides such as tetra-n-propyl titanate, tetra-i-propyl titanate, tetra-n-butyl titanate, tetra-n-butyl titanate tetramer, tetra-t-butyl titanate, tetracyclohexyl titanate, tetraphenyl titanate, and tetrabenzyl titanate; titanium oxides obtained by hydrolysis of titanium alkoxides; titanium-silicon or zirconium composite oxides obtained by hydrolysis of mixtures of titanium alkoxide and silicon alkoxide or zirconium alkoxide; titanium acetate, titanium oxalate, potassium titanium oxalate, sodium titanium oxalate, potassium titanate, sodium titanate, titanic acid-aluminum hydroxide mixture, titanium chloride, titanium chloride-aluminum chloride mixture, titanium acetylacetonate, and an organic chelated titanium complex which has an organic acid as a ligand.

When the polymerization of a polyester is carried out, a titanium (Ti) compound as a catalyst is preferably used in the range of 1ppm to 30ppm, more preferably 2ppm to 20ppm, and even more preferably 3ppm to 15ppm. In this case, 1ppm to 30ppm of titanium is contained in the polyester film of the invention.

(Titanium compound)

As the titanium compound which serves as a catalyst component, at least one organic chelated titanium complex which has an organic acid as a ligand is used. Examples of the organic acid include citric acid, lactic acid, trimellitic acid, and malic acid. Among them, an organic chelate complex having citric acid or a citric acid salt as a ligand is preferred.

For example, when a chelated titanium complex having citric acid as a ligand is used, it is possible to obtain a polyester with a low occurrence of foreign materials such as fine particles and having satisfactory polymerization activity and color tone as compared to other titanium compounds. Further, it is also possible to obtain a polyester with a small amount of terminal carboxyl groups when a citric acid chelated titanium complex is used, since the addition of the citric acid chelated titanium complex at the esterification reaction step provides satisfactory polymerization activity and color tone, as compared to the addition thereof after the esterification reaction. In this regard, it is assumed that a titanium catalyst also has esterification reaction-catalyzing effects, so addition thereof at the esterification step results in a lowering of an oligomer acid value when completing the esterification reaction whereby a subsequent condensation polymerization reaction is more efficiently carried out, and a complex having citric acid as a ligand has a higher hydrolysis resistance as compared to titanium alkoxide or the like, is therefore not hydrolyzed during the esterification reaction step, and effectively functions as a catalyst for esterification and condensation polymerization reactions while retaining an intrinsic activity thereof.

Further, an improvement in hydrolysis resistance is anticipated since it is generally known that a higher amount of terminal carboxyl results in deterioration of hydrolysis resistance and the amount of terminal carboxyl is decreased due to the addition method of the invention.

The citric acid chelated titanium complex is readily available, for example, as a commercialized product such as VERTEC AC-420 (trade name) manufactured by Johnson Matthey Plc.

The aromatic dicarboxylic acid and the aliphatic diol can be introduced by preparing a slurry containing these compounds, and supplying this slurry continuously to the esterification reaction step.

In a preferable embodiment of the esterification reaction, the polymerization reaction is carried out using a Ti catalyst in an amount that corresponds to a content of Ti element of from 1 ppm to 30 ppm, more preferably from 3 ppm to 20 ppm, and even more preferably from 5 ppm to 15 ppm. When the content of titanium element is 1 ppm or greater, it is advantageous since the speed of polymerization is increased, and when the amount is 30 ppm or less, it is advantageous in that a satisfactory color tone is obtained.

Examples of the titanium compound other than the organic chelated titanium complex generally include an oxide, a hydroxide, an alkoxide, a carboxylate, a carbonate, an oxalate and a halide. So long as the effects of the invention are not impaired, another titanium compound may be used together with the organic chelated titanium complex.

Examples of such a titanium compound include titanium alkoxides such as tetra-n-propyl titanate, tetra-i-propyl titanate, tetra-n-butyl titanate, tetra-n-butyl titanate tetramer, tetra-t-butyl titanate, tetracyclohexyl titanate, tetraphenyl titanate, and tetrabenzyl titanate; titanium oxides obtained by hydrolysis of titanium alkoxides; titanium-silicon or zirconium composite oxides obtained by hydrolysis of mixtures of titanium alkoxide and silicon alkoxide or zirconium alkoxide; titanium acetate, titanium oxalate, potassium titanium oxalate, sodium titanium oxalate, potassium titanate, sodium titanate, titanic acid-aluminum hydroxide mixture, titanium chloride, titanium chloride-aluminum chloride mixture, and titanium acetylacetonate.

According to the invention, a polyester is preferably produced by a method for producing a polyester, which includes an esterification reaction step including at least polymerizing an aromatic dicarboxylic acid and an aliphatic diol in the presence of a catalyst containing a titanium compound and adding an organic chelated titanium complex, a magnesium compound, and a pentavalent phosphoric acid ester having no aromatic ring as a substituent in this order, wherein at least one of titanium compounds is an organic chelated titanium complex which has an organic acid as a ligand; and a condensation polymerization step including subjecting the esterification reaction product produced in the esterification reaction step to a condensation polymerization reaction to form a condensation polymerization product.

In this case, according to the esterification reaction step, a decomposition reaction in condensation polymerization can be effectively inhibited while maintaining a reaction activity of a titanium catalyst to an appropriately high level and imparting magnesium-induced electrostatic applicability, through the addition sequence configuration including adding a magnesium compound in the presence of an organic chelated titanium complex as a titanium compound and then adding a specific pentavalent phosphorus compound. As a result, a polyester can be obtained having low coloration, high electrostatic applicability and improved yellowing during exposure to high temperatures.

Accordingly, it is possible to provide a polyester which, due to decreased coloration during polymerization and decreased coloration during subsequent melt film formation, has a reduced yellow color tone as compared to a conventional antimony (Sb) catalyst-based polyester, exhibits a color tone and a transparency comparable to a germanium catalyst-based polyester having a relatively high transparency, and is excellent in terms of heat resistance. Further, it is possible to obtain a polyester which has high transparency without the use of a color tone adjuster such as a cobalt compound or a pigment and has lower yellow color tone.

This polyester can be used for applications with a high demand for transparency (for example, optical film, industrial lithographic film etc.) and achieves great cost reduction due to lack of necessity to use an expensive germanium-based catalyst. Further, a cost reduction due to an improved yield may also be achieved, since the occurrence of problems or quality deterioration during the film formation is reduced due to avoidance of incorporation of foreign materials attributable to catalysts, which is likely to take place in Sb catalyst systems.

Carrying out the esterification reaction includes adding an organic chelated titanium complex which is a titanium compound, a magnesium compound, and a pentavalent phosphorus compound as an additive in this order. At this time, in the presence of an organic chelated titanium complex, the esterification reaction is carried out and then the addition of a magnesium compound is initiated before the addition of a phosphorus compound.

(Phosphorus compound)

As a pentavalent phosphorus compound, at least one pentavalent phosphoric acid ester having no aromatic ring as a substituent is used. For example, the pentavalent phosphoric acid ester may be a phosphoric acid ester having a lower alkyl group containing 2 or fewer carbon atoms as a substituent $[(OR)_3\text{-}P\text{=}O; R= \text{alkyl group containing 1 or 2 carbon atoms}]$. Specifically, trimethyl phosphate or triethyl phosphate is particularly preferable.

The addition amount of the phosphorus compound is preferably an amount that corresponds to a content of P element of from 50 ppm to 90 ppm. The addition amount of the phosphorus compound is more preferably an amount that corresponds to a content of P element of from 60 ppm to 80 ppm, and even more preferably from 60 ppm to 75 ppm.

(Magnesium compound)

When a magnesium compound is included, electrostatic applicability is enhanced. In this case, coloration is likely to occur; however, according to the invention, coloration is suppressed, and thus excellent color tone and heat resistance can be obtained.

Examples of the magnesium compound include magnesium salts such as magnesium oxide, magnesium hydroxide, magnesium alkoxide, magnesium acetate, and magnesium carbonate. Among them, from the viewpoints of solubility in ethylene glycol, magnesium acetate is most preferable.

In order to impart high electrostatic applicability, the addition amount of the magnesium compound is preferably an amount that corresponds to a content of Mg element of 50 ppm or greater, and more preferably from 50 ppm to 100 ppm. The addition amount of the magnesium compound is, from the viewpoint of imparting electrostatic applicability, preferably an amount that corresponds to a content of Mg element of from 60 ppm to 90 ppm, and even more preferably from 70 ppm to 80 ppm.

The esterification reaction step according to the invention is particularly preferably carried out in a manner such that the titanium compound which is a catalyst component and the magnesium compound and the phosphorus compound which are additives are added such that a value Z calculated from the following equation (i) satisfies the following relational expression (ii), followed by melt polymerization. Here, the content of P is an amount of phosphorus derived from total phosphorus compounds including a pentavalent phosphoric acid ester having no aromatic ring, and the content of Ti is an amount of titanium derived from total Ti compounds including an organic chelated titanium complex. As such, since a color tone with a low yellow color tone can be obtained while maintaining a catalytic activity of the titanium compound to an appropriately high level by adopting the combined use of a magnesium compound and a phosphorus compound in a catalyst system including a titanium compound and controlling the addition timing and addition ratio, it is possible to impart a heat resistance which renders yellowing not to readily occur, even with exposure to high temperatures such as through a polymerization reaction or subsequent film formation (when being melted).

(i)

$$Z=5\times(\text{P content[ppm]}/\text{P atomic weight})-2\times(\text{Mg content[ppm]}/\text{Mg atomic weight})-4\times(\text{Ti content[ppm]}/\text{Ti atomic weight})$$

(ii)

$$+0\leq Z\leq+5.0$$

This serves as an indicator reflecting a quantitative expression of the balance between three factors, since a phosphorus compound not only acts on titanium but also interacts with a magnesium compound.

Equation (i) expresses an amount of phosphorus reactive with titanium, with the exclusion of an amount of phosphorus reactive with magnesium from the total amount of reactive phosphorus. It can be said that when the value Z has a positive value, titanium-inhibiting phosphorus is in excess; on the other hand, when the value Z has a negative value, phosphorus necessary to inhibit titanium is deficient. Since one atom of each of Ti, Mg and P is not equivalent in the reaction, weighting is made by multiplying a valence by moles of individual atoms in the equation.

The invention enables the production of a polyester that is excellent in color tone and coloration resistance to heat while having a reaction activity necessary for the reaction, by using a titanium compound, a phosphorus compound and a magnesium compound which require no need of special synthesis or the like and are also easily available at a low price.

From the viewpoints of further enhancing a color tone and a coloration resistance to heat while maintaining a polymerization reactivity, Equation (ii) preferably satisfies the relationship of $+1.0\leq Z\leq+4.0$, and more preferably the relationship of $+1.5\leq Z\leq+3.0$.

In a preferable embodiment according to the invention, a chelated titanium complex having citric acid or a citric acid salt as a ligand is added in an amount of Ti element of from 1 ppm to 30 ppm to the aromatic dicarboxylic acid and the aliphatic diol before the esterification reaction is completed, and then in the presence of the chelated titanium complex, a magnesium salt of weak acid is added in an amount of Mg element of from 60 ppm to 90 ppm (more preferably, from 70 ppm to 80 ppm), and after the addition, a pentavalent phosphoric acid ester which does not have an aromatic ring as a substituent is further added in an amount of P element of from 60 ppm to 80 ppm (more preferably, from 65 ppm to 75 ppm).

The esterification reaction may be carried out while removing water or alcohol produced from the reaction to the outside of the system, using a multi-stage apparatus of at least two reaction vessels connected in series, under reflux with ethylene glycol.

The esterification reaction may be carried out in a single step, or may be carried out by division into multiple stages.

In a case in which the esterification reaction is carried out in a single step, the esterification reaction temperature is preferably 230°C to 260°C, and more preferably 240°C to 250°C.

In a case in which the esterification reaction is carried out by division into multiple stages, the temperature of the esterification reaction at the first reaction tank is preferably from 230°C to 260°C, and more preferably from 240°C to 250°C, and the pressure is preferably from 1.0 kg/cm$^2$ to 5.0 kg/cm$^2$, and more preferably from 2.0 kg/cm$^2$ to 3.0 kg/cm$^2$. The temperature of the esterification reaction at the second reaction tank is preferably from 230°C to 260°C, and more preferably from 245°C to 255°C, and the pressure is preferably from 0.5 kg/cm$^2$ to 5.0 kg/cm$^2$, and more preferably from 1.0 kg/cm$^2$ to 3.0 kg/cm$^2$. Furthermore, in a case in which the esterification reaction is carried out by division into three or more stages, the conditions for the esterification reaction in the middle stages are preferably established to be intermediate between the conditions at the first reaction tank and the conditions at the final reaction tank.

- Condensation polymerization -

The condensation polymerization produces a condensation polymerization product through a condensation polymerization reaction of the esterification reaction product produced from the esterification reaction. The condensation polymerization reaction may be carried out in a single step or may be carried out by division into multiple stages.

The esterification reaction product such as oligomers produced in the esterification reaction is continuously subjected to a condensation polymerization reaction. This condensation polymerization reaction can be preferably carried out by supplying the esterification reaction product to condensation polymerization reaction tanks of multiple stages.

For example, the condensation polymerization reaction conditions, in the case of performing the reaction in a three-stage reaction tank, are that the reaction temperature at the first reaction tank is preferably from 255°C to 280°C, and more preferably from 265°C to 275°C, and the pressure is preferably from 100 torr to 10 torr (from $13.3 \times 10^{-3}$ MPa to $1.3 \times 10^{-3}$ MPa), and more preferably from 50 torr to 20 torr (from $6.67 \times 10^{-3}$ MPa to $2.67 \times 10^{-3}$ MPa). The reaction temperature at the second reaction tank is preferably from 265°C to 285°C, and more preferably from 270°C to 280°C, and the pressure is preferably from 20 torr to 1 torr (from $2.67 \times 0.3$ MPa to $1.33 \times 10^{-4}$ MPa), and more preferably 10 torr to 3 torr (from $1.33 \times 10^{-3}$ MPa to $4.0 \times 10^{-4}$ MPa). In the third and final reaction tank, the reaction temperature is preferably from 270°C to 290°C, and more preferably from 275°C to 285°C, and the pressure is preferably from 10 torr to 0.1 torr (from $1.33 \times 1.0^{-3}$ MPa to $1.33 \times 10^{-5}$ MPa), and more preferably from 5 torr to 0.5 torr (from $6.67 \times 10^{-4}$ MPa to $6.67 \times 10^{-5}$ MPa).

The polyester synthesized as above may further contain additives such as a light stabilizer, an antioxidant, a UV absorber, a flame retardant, a lubricant (fine particles), a nucleating agent (crystallizing agent), and a crystallization inhibitor.

The polyester which is a raw material for a polyester sheet is preferably a solid-phase polymerized pellet.

By further carrying out solid-phase polymerization after polymerization with the esterification reaction, a moisture content of a polyester film, a crystallization degree, an acid value of polyester, that is, a concentration of terminal carboxyl groups of polyester (Acid Value: AV), (eq/ton) and an Intrinsic Viscosity (IV) (dL/g) can be controlled.

In the invention, eq/ton denotes mole equivalent per ton.

The intrinsic viscosity (IV) of polyester is preferably in the range of 0.7 to 0.9.

If the intrinsic viscosity is 0.7 or greater, the molecular motion of polyester is inhibited to render crystallization difficult to occur. On the other hand, if the intrinsic viscosity is 0.9 or less, there is substantially no thermolysis of polyester due to the shear heat in an extruder, thus inhibiting the crystallization, and an acid value (AV) may be inhibited at a low level.

IV is more preferably in the range of from 0.75 to 0.85.

In particular, with regard to the esterification reaction, by using a Ti catalyst and carrying out solid-phase polymerization such that the intrinsic viscosity (IV) of polyester is in the range of from 0.7 to 0.9, crystallization of a polyester is easily inhibited in a cooling step of a molten resin during the production process of a polyester sheet.

Therefore, the polyester which is a raw material for a polyester sheet preferably has an intrinsic viscosity of from 0.7 to 0.9 and also preferably contains catalyst (Ti catalyst)-derived titanium atoms.

The intrinsic viscosity (IV) is a value obtained by the extrapolation of a value a specific viscosity ($\eta_{sp}=\eta_r-1$) divided by the concentration, which is obtained by subtracting 1 from a ratio $\eta_r$ ($=\eta/\eta_0$; relative viscosity) of a solution viscosity ($\eta$) and a solvent viscosity ($\eta_0$), with respect to concentration, to a state where the concentration is zero. IV is calculated from a solution viscosity at 25°C after dissolving a polyester in a mixed solvent of 1,1,2,2-tetrachloroethane/phenol (=2/3[mass ratio]), using a Ubbelohde viscometer.

In the solid-phase polymerization of a polyester, the polyester polymerized through the above-described esterification reaction or a commercially available polyester processed into the form of a platelet such as pellet may be used as a starting material.

The solid-phase polymerization of polyester may be a continuous method (a method of filling a resin in a tower, allowing the resin to remain for a predetermined period of time while being heated, and sequentially discharging the resin) or a batch method (a method of introducing a resin into a container and heating the resin for a predetermined period of time).

The solid-phase polymerization of the polyester is preferably carried out at a temperature of from 150°C to 250°C, more preferably from 170°C to 240°C and even more preferably from 180°C to 230°C, for from 1 hour to 50 hours, more preferably from 5 hours to 40 hours and even more preferably from 10 hours to 30 hours. Further, the solid-phase polymerization is preferably carried out in a vacuum or in a nitrogen stream.

The temperature of solid-phase polymerization is preferably in the range of from 170°C to 240°C, more preferably from 180°C to 230°C and even more preferably from 190°C to 220°C. If the temperature is within the above-specified range, it is preferable since the acid value (AV) of polyester is more significantly reduced. The solid-phase polymerization time is preferably in the range of from 5 hours to 100 hours, more preferably from 10 hours to 75 hours and even more preferably from 15 hours to 50 hours. If the polymerization time is within the above-specified range, it is preferable since an acid value (AV) and an intrinsic viscosity (IV) of polyester can be easily controlled within the preferable range of the invention. The solid-phase polymerization is preferably carried out under vacuum or under a nitrogen atmosphere.

(Terminal sealing agent)

In the method of producing the polyester sheet of the invention, at least one terminal sealing agent of an oxazoline compound, a carbodiimide compound or an epoxy compound is preferably used during melt-extrusion of the polyester that is a raw material of the polyester sheet (raw polyester). The polyester containing a terminal sealing agent excels in adhesion with adjacent materials to the polyester sheet or the polyester film which is produced by stretching the polyester sheet. When the terminal sealing agent is contained in the polyester, the polyester is particularly preferably polyester after solid-phase polymerization.

In the method of producing the polyester sheet, a polyester having a half-value width of a crystallization temperature on cooling of 5°C to 50°C is extruded in a sheet via the extruder, filter and die, for example, after the polyester being dried and molten by the extrusion process.

When the extrusion process includes an addition process of at least one terminal sealing agent selected from the group consisting of oxazoline compound, carbodiimide compound and epoxy compound, resistance to climate of the polyester sheet or the polyester film is enhanced and thermal shrinkage of the polyester sheet or the polyester film is suppressed to be lower.

Addition time of the terminal sealing agent in the polyester is not limited as long as the addition is conducted during from charging of raw materials of the polyester to extrusion of the polyester. However, the terminal sealing agent is preferably added during after drying the polyester, introduction of the polyester into the extruder barrel, conveying the moltem resin by screwing, to before being extruded from the extruder, and melt-neaded together with the polyester.

For example, after drying the polyester, the terminal sealing agent may be introduced into the extruder barrel together with the polyester, or may be directly introduced into the polyester in the extruder barrel via a feed opening which is for feeding the terminal sealing agent and provided between an introduction opening for raw materials in the melt-extruder barrel and an outlet opening for the molten polyester. The terminal sealing agent may be introduced into the polyester which is began to heat melt but not in a wholly molten state, or into a wholly molten polyester.

The terminal sealing agent in the exemplary embodiment of the invention is preferably a compound containing a carbodiimido group, an epoxy group or an oxazolino group. Specific preferred examples of the terminal sealing agent include carbodiimide compound, epoxy compound, oxazoline compound and the like.

The carbodiimide compound having a carbodiimido group may be monofunctional carbodiimide or polyfunctional carbodiimide. Examples of the monofunctional carbodiimide include dicyclohexyl carbodiimide, diisopropyl carbodiimide, dimethyl carbodiimide, diisobutyl carbodiimide, dioctyl carbodiimide, t-butyl isopropyl carbodiimide, diphenyl carbodiimide, di-t-butyl carbodiimide and di-$\beta$-naphthyl carbodiimide. Among them, dicyclohexyl carbodiimide or diisopropyl carbodiimide is preferrable.

As the polyfunctional carbodiimide, polycarbodiimide with a polymerization degree of 3 to 15 is preferably used. The polycarbodiimide generally includes a repeating unit represented by the following formula -R-N=C=N-. In the formula, R represents a divalent linking group such as an alkylene, an arylene or the like.

Examples of the repeating unit include 1,5-naphthalene carbodiimido group, 4,4'-diphenyl methane carbodiimido group, 4,4'-diphenyl dimethyl methane carbodiimido group, 1,3-phenylene carbodiimido group, 2,4-tolylene carbodiimido group, 2,6-tolylene carbodiimido group, 2,4-tolylene carbodiimido/2,6-tolylene carbodiimido group mixture, hexamethylene carbodiimido group, cyclohexane-1,4-carbodiimido group, xylylene carbodiimido group, isophorone carbodiimido group, dicyclohexyl methane-4,4'-carbodiimido group, methyl cyclohexane carbodiimido group, tetramethyl xylylene carbodiimide group, 2,6-diisopropyl phenyl carbodiimido group, 1,3,5-triisopropyl benzene-2,4-carbodiimido group and the like.

Since a carbodiimide compound suppresses generation of isocyanate-based gas through thermolysis, a carbodiimide compound with high heat resistance is preferable. In order to enhance heat resistance, a higher molecular weight (polymerization degree) is preferable. More preferably, termini of a carbodiimide compound are preferably to have a structure with high heat resistance. Further, advantageous effects of the carbodiimide compound in terms of resistance to climate and inhibiting thermal shrinkage of the polyester sheet or the polyester film are effectively enhanced by lowering a melt-extrusion temperature of the raw polyester to a lower temperature as possible.

The polyester film of the present invention to which such a carbodiimide compound is added preferably exhibits generation of from 0 to 0.02% by mass of isocyanate-based gas at a temperature of 300°C over 30 minutes. If the amount of the isocyanate-based gas generated is 0.02% by mass or less, since bubbles (voids) are hardly produced in the polyester film and thereby formation of stress concentration point is suppressed, breaking and peeling which generally tend to be taken place therefrom in the polyester film are inhibited. As a result, this tends to result in excellent adhesion with the adjacent materials.

Here the isocyanate-based gas is a gas having an isocyanato group, and examples thereof include diisopropyl phenylisocyanate, 1,3,5-triisopropyl phenyl diisocyanate, 2-amino-1,3,5-triisopropyl phenyl-6-isocyanate, 4,4'-dicyclohexyl methane diisocyanate, isophorone diisocyanate, cyclohexyl isocyanate and the like.

Preferable examples of the epoxy compounds containing an epoxy group include glycidyl esters, glycidyl ethers and the like.

Examples of the glycidyl ester include glycidyl benzoate, glycidyl t-butylbenzoate, glycidyl p-toluate, glycidyl cyclohexanecarboxylate, glycidyl pelargonate, glycidyl stearate, glycidyl laurate, glycidyl palmitate, glycidyl behenate, glycidyl barsatate, glycidyl versatate, glycidyl oleate, glycidyl linolate, glycidyl linolenate, glycidyl behenolate, glycidyl stearolate, diglycidyl terephthalate, diglycidyl isophthalate, diglycidyl phthalate, diglycidyl naphthalenedicarboxylate, diglycidyl methylphthalate, diglycidyl hexahydrophthalate, diglycidyl tetrahydrophthalate, diglycidyl cyclohexanedicarboxylate, diglycidyl adipate, diglycidyl succinate, diglycidyl sebacate, diglycidyl dodecanedionate, diglycidyl octadecanedicarboxylate, triglycidyl trimellitate, tetraglycidyl pyromellitate and the like.

Examples of the glycidyl ether include phenyl glycidyl ether, o-phenyl glycidyl ether, 1,4-bis($\beta,\gamma$-epoxypropoxy) butane, 1,6-bis($\beta,\gamma$-epoxypropoxy) hexane, 1,4-bis($\beta,\gamma$-epoxypropoxy) benzene, 1-($\beta,\gamma$-epoxypropoxy)-2-ethoxyethane, 1-($\beta,\gamma$-epoxypropoxy)-2-benzyloxyethane, bisglycidyl polyethers obtained by a reaction of bisphenols such as 2,2-bis[p-($\beta,\gamma$-epoxypropoxy) phenyl]propane, 2,2-bis -(4-hydroxyphenyl)methane or the like with epichlorohydrin, and the like.

The oxazoline compound may be arbitrarily selected from compounds having a oxazolino group. Among them, a bisoxazoline compound is preferable. Examples of the bisoxazoline compounds include 2,2'-bis(2-oxazoline), 2,2'-bis(4-methyl-2-oxazoline), 2,2'-bis(4,4-dimethyl-2-oxazoline), 2,2'-bis(4-ethyl-2-oxazoline), 2,2'-bis(4,4-diethyl-2-oxazoline), 2,2'-bis(4-propyl-2-oxazoline), 2,2'-bis(4-butyl-2-oxazoline), 2,2'-bis(4-hexyl-2-oxazoline),, 2,2'-bis(4-phenyl-2-oxazoline), 2,2'-bis(4-cyclohexyl-2-oxazoline),, 2,2'-bis(4-benzyl-2-oxazoline), 2,2'-p-phenylene-bis(2-oxazoline), 2,2'-m-phenylene-bis(2-oxazoline), 2,2'-o-phenylene-bis(2-oxazoline), 2,2'-p-phenylene-bis(4-methyl-2-oxazoline), 2,2'-p-phenylene-bis(4,4-dimethyl-2-axazoline), 2,2'-m-phenylene-bis(4-methyl-2-oxazoline), 2,2'-m-phenylene-bis(4,4-dimethyl-2-oxazoline), 2,2'-ethylene-bis(2-oxazoline), 2,2'-tetramethylene-bis(2-oxazoline), 2,2'-hexamethylene-bis(2-oxazoline), 2,2'-octamethylene-bis(2-oxazoline), 2,2'-decamethylene-bis(2-oxazoline), 2,2'-ethylene-bis(4-methyl-2-oxazoline), 2,2'-tetramethylene-bis(4,4-dimethyl-2-oxazoline), 2,2',9,9'-diphenoxyethane-bis(2-oxazoline), 2,2'-cyclohexylene-bis(2-oxazoline), 2,2'-diphenylene-bis(2-oxazoline), and the like. Among them, 2,2'-bis(2-oxazoline) is most preferable from the viewpoints of excellent reactivity with polyester and higher enhancing effects in resistance to climate of reaction products. The bisoxazoline compound may be used singularly or in a combination of two or more kinds thereof unless otherwise advantageous effects of the invention will not be impaired.

A content of the terminal sealing agent in the polyester is preferably from 0.1% by mass to 5% by mass, more preferably from 0.3% by mass to 4% by mass, and even more preferably from 0.5% by mass to 2% by mass, with respect to a total mass of the polyester. When the content of the terminal sealing agent in the polyester is 0.1% by mass or more, resistance to climate due to the AV lowering effect and less thermal shrinkage of the polyester sheet or the polyester film are provided. When the content of the terminal sealing agent in the polyester is 5% by mass or less, lowering a glass transition temperature (Tg) of the polyester due to addition of the terminal sealing agent is suppressed, and thereby decreasing resistance to climate and increasing thermal shrinkage of the polyester sheet or the polyester film may be suppressed.

The mechanism thereof is not known explicitly, however, considered such that increase of hydrolyzability of the polyester which is caused by relatively increased reactivity of the polyester due to lowering the glass transition temperature (Tg) and thermal shrinkage of the polyester sheet or the polyester film which tends to be caused by increased mobility of the polyester molecule due to lowering the glass transition temperature (Tg) are suppressed.

In the exemplary embodiment of the invention, the polyfunctional monomer of trifunctional or higher functional and the terminal sealing agent above described are respectively used singularly or in a combination thereof.

<Method for producing a polyester film >

The method for producing a polyester film according to the invention is a method in which a polyester sheet obtained by the method for producing a polyester sheet according to the invention is stretched to produce a polyester film having a thickness of from 250μm to 500μm.

By designing the configuration of the method for producing a polyester film with the above-mentioned configuration, the resulting polyester film is capable of inhibiting weather resistance unevenness.

As used herein, the term "polyester film" refers to a post-stretching polyester having a thickness of from 250μm to 500μm.

As described hereinbefore, inhibition of hydrolysis of a polyester even under the environment where a polyester film is always exposed to weather, that is, weather resistance, becomes an important subject. The hydrolysis of a polyester tends to easily occur when there is stretching unevenness in a polyester film.

Although the polyester film may be obtained by stretching a polyester sheet, the occurrence of unevenness when stretching a polyester sheet into a film having a thinner thickness is believed to be due to the fact that constitutive components of the polyester sheet are not uniform. That is, it is believed that stretching of the polyester sheet results in stretching unevenness, because crystalline components softer than amorphous components and rigid amorphous components as compared to crystalline components are present throughout the polyester sheet.

Here, when the polyester sheet produced by the method for producing a polyester sheet according to the invention as a polyester sheet is stretched, stretching unevenness can be inhibited because crystallization of the polyester sheet is inhibited.

As a result, it is possible to produce a polyester film with inhibition of weather resistance unevenness and having a thickness of from 250$\mu$m to 500$\mu$m.

The method of stretching the polyester sheet may be monoaxial stretching or biaxial stretching. From the viewpoints of strength and shape stability of the resulting polyester film, biaxial stretching is preferable.

For example, a polyester sheet is subjected to longitudinal stretching at a stretching stress of from 5MPa to 15MPa and a stretching ratio of from 2.5-fold to 4.5-fold in the longitudinal direction of the polyester sheet and horizontal stretching in the width direction.

More specifically, a polyester sheet is guided to a roll group heated to a temperature of from 70°C to 120°C and is subjected to longitudinal stretching at a stretching stress of from 5MPa to 15MPa and a stretching ratio of from 2.5-fold to 4.5-fold in the lengthwise direction (longitudinal direction, that is, traveling direction of a film), and more preferably a stretching stress of from 8MPa to 14MPa and a stretching ratio of from 3.0-fold to 4.0-fold. After the longitudinal stretching, cooling is preferably carried out in a roll group at a temperature of from 20°C to 50°C.

Subsequently, the polyester sheet is guided to a tenter while both ends of the polyester sheet are held with clips, and is preferably subjected to horizontal stretching under an atmosphere heated to a temperature of from 80°C to 150°C, at a stretching stress of from 8MPa to 20MPa and a stretching ratio of from 3.4-fold to 4.5-fold in the direction perpendicular to the longitudinal direction, that is, in the width direction, and more preferably horizontal stretching at a stretching stress of from 10MPa to 18MPa and a stretching ratio of from 3.6-fold to 4.2-fold.

The stretching area ratio (longitudinal stretching ratio $\times$ horizontal stretching ratio) by the biaxial stretching is preferably in the range of from 9-fold to 20-fold. If the area ratio is in the range of from 9-fold to 20-fold, a biaxially stretched polyester film is obtained having a post-stretching thickness of from 250$\mu$m to 500$\mu$m, a high plane orientation degree, a crystallization degree of from 30% to 40%, and an equilibrium moisture content of from 0.1% by mass to 0.25% by mass.

The method of biaxially stretching the film may be any of a successive biaxial stretching method of separately carrying out stretching in the longitudinal direction and stretching in the width direction as described above, and a simultaneous biaxial stretching method of carrying out stretching in the longitudinal direction and stretching in the width direction at the same time.

(Heat fixation)

In order to impart flatness and dimensional stability by completing crystal orientation of the resulting biaxial stretching film, a heat fixation treatment is preferably carried out continuously in a tenter. The film after being subjected to biaxial stretching is preferably subjected to a heat fixation treatment at a tension of 1kg/m to 10kg/m and a temperature of from 210°C to 230°C. The heat fixation treatment under these conditions improves flatness and dimensional stability, and a difference between moisture contents measured at arbitrary intervals of 10cm may be set to fall within the range of from 0.01% by mass to 0.06% by mass.

Preferably, a polyester sheet is subjected to a heat fixation treatment at a temperature equal to or higher than a glass transition temperature (Tg) of the polyester which is a raw material for a polyester sheet and lower than a melting point (Tm) of the polyester, for from 1 second to 30 seconds, uniformly and slowly cooled, and then cooled to room temperature. Generally, since a thermal shrinkage of a film is large if the heat fixation treatment temperature (Ts) is low, the thermal treatment temperature is preferably high in order to impart a high thermal dimensional stability. However, if the thermal treatment temperature is excessively high, an orientation-crystallizing property is deteriorated and therefore the moisture content of the resulting film is increased which may result in deterioration of a hydrolysis resistance. Therefore, the heat fixation treatment temperature (Ts) of the polyester film according to the invention is preferably in the range of $40°C \leq (Tm-Ts) \leq 90°C$. The heat fixation treatment temperature (Ts) is more preferably in the range of $50°C \leq (Tm-Ts) \leq 80°C$ and even more preferably $55°C \leq (Tm-Ts) \leq 75°C$.

Although the resulting polyester film may be used as a back sheet constituting a solar cell module, the atmospheric temperature may increase up to about 100°C when using a module, so the heat fixation treatment temperature (Ts) is preferably in the range of from 160°C to Tm-40°C (provided that Tm-40°C>160°C). Ts is more preferably in the range of from 170°C to Tm-50°C (provided that Tm-50°C>170°C) and even more preferably from 180°C to Tm-55°C (provided that Tm-55°C>180°C). The heat fixation treatment temperature is preferably carried out by sequentially lowering a temperature difference within the range of from 1°C to 100°C in two or more divided regions.

Further, if necessary, the polyester film may be subjected to a 1 to 12% relaxation treatment in the width direction or in the longitudinal direction. The heat-fixed polyester film is typically cooled to Tg or lower and is wound into a roll shape after cutting the clip-holding portions of both ends of the polyester film. At this time, within the temperature range equal to or lower than the final heat fixation treatment temperature and equal to or higher than Tg, the polyester film is preferably subjected to a 1 to 12% relaxation treatment in the width direction and/or in the longitudinal direction.

It is preferable from the viewpoint of dimensional stability that the cooling is slowly carried out at a cooling rate of from 1°C/sec to 100°C/see from the final heat fixation temperature to room temperature. In particular, it is preferable that the cooling is slowly carried out at a cooling rate of from 1°C/sec to 100°C/sec from Tg+50°C to Tg. Although there are no particular limitations on the means for cooling and relaxation treatments and these treatments may be carried out using a conventional known means, in particular, sequential cooling is carried out in plural temperature regions, and such a treatment is preferable from the viewpoint of improving a dimensional stability of the polyester film.

Further, when producing the polyester film, for the purpose of improving strength of the polyester film, stretching used in known stretched films may be carried out such as multi-stage longitudinal stretching, re-longitudinal stretching, re-longitudinal/horizontal stretching, and horizontal/longitudinal stretching. The order of carrying out longitudinal stretching and horizontal stretching may be reversed.

[Polyester film]

A polyester film having a thickness of from 250μm to 500μm is produced by using the method for producing a polyester film according to the invention.

The polyester film of the exemplary embodiment of the invention preferably includes a constitutive component derived from the polyfunctional monomer in which a total (a+b) of the carboxylic group number (a) and the hydroxyl group number (b) is 3 or more. Further, the polyester film of the exemplary embodiment of the invention preferably includes a constitutive component derived from at least one terminal sealing agent of oxazoline compound, carbodiimide compound, or epoxy compound.

When the polyester film includes a constitutive component derived from the polyfunctional monomer of trifunctional or higher functional, the polyester film excels in adhesion with adjacent materials to the polyester sheet or the polyester film which is produced by stretching the polyester sheet. Further, when the polyester film includes a constitutive component derived from the terminal sealing agent, the polyester film excels in adhesion with adjacent materials to the polyester sheet or the polyester film which is produced by stretching the polyester sheet.

The polyester film of the exemplary embodiment of the invention may be produced by the method of producing a polyester film, including stretching a polyester sheet formed by the method for producing a polyester sheet according to the present invention to produce a polyester film having a thickness of from 250 μm to 500 μm. As described above,

The polyester which is a raw material of the polyester sheet (raw polyester) is synthesized by a known method, for example, esterification reaction and/or transesterification reaction of a dicarboxylic acid component (A) with a diol component (B), and preferably further copolymerizing the polyfunctional monomer of trifunctional or higher functional therewith. Specific examples or the preferable embodiments of the dicarboxylic acid component (A), the diol component (B) and the polyfunctional monomer are as described above respectively.

(Constitutive component derived from polyfunctional monomer)

Examples of the constitutive components derived from the polyfunctional monomer in which a total (a+b) of the carboxylic group number (a) and the hydroxyl group number (b) is 3 or more include carboxylic acids in which the carboxylic group number (a) is 3 or more, ester derivatives and acid anhydrides thereof, oxy acids in which a hydroxyl group(s) and a carboxylic group(s) are present in a molecule and a total (a+b) of the carboxylic group number (a) and the hydroxyl group number (b) is 3 or more, and the like. Specific examples or the preferable embodiments thereof are as described above respectively.

Further, adducts are also preferably used in which 1-lactide, d-lactide, oxy acids such as hydroxybenzoic acid, and derivatives thereof or oxy acids thereof are plurally attached to the carboxyl terminal of the above-mentioned carboxylic acid constitutive components or the polyfunctional monomer constitutive components having the carboxylic group and the hydroxyl group in one constitutive component. These may be used singularly or in any combination thereof if necessary.

In the polyester film of the exemplary embodiment of the invention, the content of the constitutive component derived from the polyfunctional monomer of trifunctional or higher functional is preferably from 0.005 mol% to 2.5 mol%, with respect to the total mole of all components in the polyester film, more preferably from 0.020 mol% to 1 mol%, still more preferably from 0.025 mol% to 1 mol%, further preferably from 0.035 mol% to 0.5 mol%, further still preferably from 0.05 mol% to 0.5 mol%, and particularly preferably from 0.1 mol% to 0.25 mol%.

Due to the presence of the constitutive component derived from the polyfunctional monomer of trifunctional or higher functional in the polyester film substrate, a branched structure of a polymer chain in the polyester based on the constitutive component derived from the polyfunctional monomer of trifunctional or higher is formed and entanglement of molecules of the polyester may be increased. As a result, even when a molecular weight of the polyester is lowered due to the hydrolysis of the polyester molecules under a high temperature and humid environment, embrittlement of the polyester film is suppressed by the formed entanglement of molecules of the polyester and excellent resistance to climate of the polyester film may be obtained. Further this entanglement of molecules of the polyester serves to suppress thermal shrinkage of the polyester film.

A mechanism of the effect is presumed that since mobility of the polyester molecule decreases due to the entanglement of molecules of the polyester, shrinkage of the polyester is inhibited even when thermal shrinkage tends to be caused in general case, thereby thermal shrinkage of the polyester film is suppressed.

Therefore, when the content of the constitutive component derived from the polyfunctional monomer of trifunctional or higher functional is 0.005 mol% or higher, resistance to climate and lowering thermal shrinkage of the polyester film may be further improved. When the content of the constitutive component derived from the polyfunctional monomer of trifunctional or higher functional is 2.5 mol% or less, tendency of hardly crystallization is suppressed due to bulkiness of the constitutive component derived from the polyfunctional monomer of trifunctional or higher functional.

As a result, formation of less mobile component through crystal is promoted and lowering hydrolyzability of the polyester is suppressed. Further increment of a free volume (space between molecules) due to bulkiness of the constitutive component derived from the polyfunctional monomer of trifunctional or higher functional may be inhibited and thermal shrinkage of the polyester film which is caused by slipping through polyester molecules in the large free volume may be suppressed. Further, lowering the glass transition temperature (Tg) of the polyester due to over addition of the constitutive component derived from the polyfunctional monomer of trifunctional or higher functional may be suppressed and may be effective to prevent lowering resistance to climate of the polyester film.


(Constitutive component derived from terminal sealing agent)


The polyester film of the exemplary embodiment of the invention preferably includes a constitutive component derived from the terminal sealing agent selected from oxazoline compound, carbodiimide compound or epoxy compound. Here, the constitutive component derived from the terminal sealing agent is referred to as a constitutive component bonded with the terminal sealing agent at at least a terminal of the polyester via reaction of the terminal sealing agent with a terminal carboxyl group(s) of the polyester.

Since the terminal sealing agent reacts with a terminal carboxyl group(s) of the polyester and is present bonded at a terminal of a polymer chain of the polyester as a component of the polyester when the terminal sealing agent is included in the polyester film, a terminal carboxyl group concentration (AV) is capable to be stably maintained in a desirable range such as the preferable range described above. That is, a hydrolysis of the polyester, which is promoted by a terminal carboxyl group of the polyester, is suppressed and therefore resistance to climate of the polyester may be maintained to be high. Further, as the constitutive component derived from the terminal sealing agent in the polyester is bulky, the polyester molecule hardly moves via slipping through in a free volume in the polyester film. As the result, thermal shrinkage of the polyester film accompanied by movement of the polyester molecule may be inhibited.

The terminal sealing agent which derives the constitutive component derived from the terminal sealing agent may be used singularly or in a combination of two kinds or more thereof. A content of the constitutive component derived from the terminal sealing agent is preferably in a range of from 0.1% by mass to 5% by mass, more preferably in a range of from 0.3% by mass to 4% by mass, and even more preferably in a range of from 0.5% by mass to 2% by mass, with respect to a total mass of the polyester. When the content of the constitutive component derived from the terminal sealing agent is 0.1% by mass or more, improvement of the resistance to climate of the polyester film by the effect of lowering AV and diminishing thermal shrinkage of the polyester film may be achieved. When the content of the constitutive component derived from the terminal sealing agent is 5% by mass or less, lowering the glass transition temperature (Tg) of the polyester due to addition of the terminal sealing agent may be suppressed and lowering of resistance to climate and increment of thermal shrinkage of the polyester film due to lowering Tg may be suppressed. When Tg of the polyester is lowered

The mechanism thereof is not known explicitly, however, considered such that increase of hydrolyzability of the polyester which is caused by relatively increased reactivity of the polyester due to lowering the glass transition temperature (Tg) and thermal shrinkage of the polyester film which tends to be caused by increased mobility of the polyester molecule due to lowering the glass transition temperature (Tg) are suppressed.

Specific examples or the preferable embodiments of the terminal sealing agent are as described above respectively.

From the viewpoints of electrical insulation property, the thickness of the polyester film is preferably in the range of from $250\mu m$ to $400\mu m$ and more preferably from $250\mu m$ to $350\mu m$.

As described above, the resulting polyester film is preferable as a reverse side-protecting sheet (so-called back sheet) disposed at the reverse side opposite to the light incidence side of solar cell power generation module sunlight, a barrier film base, or the like.

The application for a solar cell power generation module may employ an embodiment in which power generation devices (solar cell devices) connected with lead wires that take out electricity, are sealed with a sealing agent such as an ethylene-vinyl acetate copolymer-based (EVA-based) resin, this assembly is placed between a transparent substrate such as glass and the polyester film (back sheet) of the invention, and the respective components are pasted onto each other. As the solar cell device, various known solar cell devices such as silicon-based devices such as single crystal silicon, polycrystalline silicon and amorphous silicon; and Group III-V or Group II-VI compound semiconductor-based devices such as copper-indium-gallium-selenium, copper-indium-selenium, cadmium-tellurium and gallium-arsenic, can be applied. The disclosures of Japanese Patent Application Nos.2010-172333, filed on July 30, 2010, and 2011-157220, filed on July 15, 2011, are incorporated by reference herein.

EXAMPLES

Now, the invention will be described in further detail with reference to Examples. However, the invention is by no means restricted to the following Examples within a range not to exceed the gist.

<Synthesis of raw material polyester>

(Raw material polyester 1)

As described below, using a direct esterification method in which terephthalic acid and ethylene glycol are directly reacted, followed by evaporation of water and esterification, and condensation polymerization is carried out under reduced pressure, a polyester (Ti catalyst-based PET) was obtained in a continuous polymerization apparatus.

(1) Esterification reaction

In a first esterification reaction tank, 4.7 tons of high purity terephthalic acid and 1.8 tons of ethylene glycol were mixed over 90 minutes to form a slurry, and the slurry was continuously supplied to the first esterification reaction tank at a flow rate of 3800 kg/h. Furthermore, an ethylene glycol solution of a citric acid chelated titanium complex (VERTEC AC-420, trade name, manufactured by Johnson Matthey Plc.) having Ti metal coordinated with citric acid was continuously supplied, and a reaction was carried out at a temperature inside the reaction tank of 250°C and for an average retention time of about 4.3 hours with stirring. At this time, the citric acid chelated titanium complex was continuously added such that the addition amount of Ti element was 9 ppm. At this time, the acid value of the oligomer thus obtained was 600 eq/ton.

This reaction product was transferred to a second esterification reaction tank, and with stirring, the reaction product was allowed to react at a temperature inside the reaction tank of 250°C for an average retention time of 1.2 hours. Thus, an oligomer having an acid value of 200 eq/ton was obtained. The inside of the second esterification reaction tank was divided into three zones, so that an ethylene glycol solution of magnesium acetate was continuously supplied at the second zone such that the addition amount of Mg element was 75 ppm, and subsequently an ethylene glycol solution of trimethyl phosphate was continuously supplied at the third zone such that the addition amount of P element was 65 ppm.

(2) Condensation polymerization reaction

The esterification reaction product obtained as described above was continuously supplied to a first condensation polymerization reaction tank, and with stirring, condensation polymerization was carried out at a reaction temperature of 270°C and a pressure inside the reaction tank of 20 torr ($2.67 \times 10^{-3}$ MPa) for an average retention time of about 1.8 hours.

Furthermore, the reaction product was transferred to a second condensation polymerization reaction tank, and in this reaction tank, a reaction (condensation polymerization) was carried out with stirring under the conditions of a temperature inside the reaction tank of 276°C and a pressure inside the reaction tank of 5.0 torr ($6.67 \times 10^{-4}$ MPa) for a retention time of about 1.2 hours.

Subsequently, the reaction product was further transferred to a third condensation polymerization reaction tank, and in this reaction tank, a reaction (condensation polymerization) was carried out under the conditions of a temperature inside the reaction tank of 278°C and a pressure inside the reaction tank of 1.5 torr ($2.0 \times 10^{-4}$ MPa) for a retention time of 1.5 hours. Thus, a reaction product (polyethylene terephthalate (PET)) was obtained.

Subsequently, the reaction product thus obtained was ejected in cold water into a strand form, and the strands were immediately cut to produce pellets of a polyester resin <cross-section: major axis about 4 mm, minor axis about 2 mm, length: about 3 mm>.

The resulting polyester was measured according to the following procedure, using High Resolution Inductively Coupled Plasma Mass Spectrometry (HR-ICP-MS, AttoM, trade name, manufactured by SII NanoTechnology Inc.). The results are as follows: Ti=9ppm, Mg=75ppm and P=60ppm. P exhibited a slight decrease as compared to the initial addition amount thereof and it is assumed that P was volatilized during the polymerization process.

The resulting polymer had an IV=0.65, a terminal carboxyl group concentration AV=22 eq/ton, a melting point=257°C, and a solution haze=0.3%.

- Solid-phase polymerization -

The thus obtained polyester pellet was subjected to solid-phase polymerization by a batch method. That is, the polyester pellet was introduced into a container and with stirring under vacuum, was subjected to solid-phase polymerization under the following conditions.

After the pre-crystallization treatment at 150°C, a solid-phase polymerization reaction was carried out at 190°C for 30 hours.

The resulting raw material polyester 1 had an intrinsic viscosity IV=0.78 and a terminal carboxyl group concentration AV=15 eq/ton.

(Raw material polyester 2)

Raw material polyester 2 was obtained in substantially the same manner as that in Synthesis of raw material polyester 1, except that the solid-phase polymerization time was changed to 12 hours.

The resulting raw material polyester 2 had an intrinsic viscosity IV=0.70 and a terminal carboxyl group concentration AV=19 eq/ton.

(Raw material polyester 3)

Raw material polyester 3 was obtained in substantially the same manner as that in Synthesis of raw material polyester 1, except that the solid-phase polymerization time was changed to 60 hours.

The resulting raw material polyester 3 had an intrinsic viscosity IV=0.90 and a terminal carboxyl group concentration AV=10 eq/ton.

(Raw material polyester 4)

According to the following procedure, polymerization was carried out with a changed addition amount of a Ti catalyst (titanium alkoxide compound) and a raw material polyester containing an amount of antimony (Sb) and a different amount of titanium (Ti) was obtained. A specific method is as follows.

100 tons of dimethyl terephthalate and 70 tons of ethylene glycol were subjected to a transesterification reaction according to a conventional method using calcium acetate monohydrate and magnesium acetate tetrahydrate as transesterification catalysts, trimethyl phosphate was added thereto, and the transesterification reaction was substantially terminated. Further, titanium tetrabutoxide and antimony trioxide were added and subjected to a condensation polymerization reaction at a high temperature under high vacuum according to a conventional method, thereby obtaining a reaction product.

The resulting reaction product was cut to prepare a polyester pellet <cross-section: major axis about 4mm, minor axis about 2mm, length: about 3mm>.

The resulting polyester was measured according to the following procedure, using High Resolution Inductively Coupled Plasma Mass Spectrometry (HR-ICP-MS, AttoM, trade name, manufactured by SII NanoTechnology Inc.). The results are as follows: Ti=0ppm, and Sb=9ppm.

Next, the resulting polyester was introduced into a container, subjected to a pre-crystallization treatment at 150°C, and with stirring under vacuum, was then subjected to a solid-phase polymerization reaction at 190°C for 30 hours, thereby obtaining raw material polyester 4 having an intrinsic viscosity IV=0.78 and a terminal carboxyl group concentration AV=27 eq/ton.

(Raw material polyester 5)

Raw material polyester 5 was obtained in substantially the same manner as that in Synthesis of raw material polyester 1, except that the solid-phase polymerization reaction was not carried out.

The resulting raw material polyester 5 had an intrinsic viscosity IV=0.65 and a terminal carboxyl group concentration AV=22 eq/ton.

(Raw material polyesters 6 to 17)

Raw material polyesters 6 to 17 were obtained in substantially the same manner as that in Synthesis of raw material polyester 1, except that each amount shown in the column in Tables 1 and 2 of each of the polyfunctional monomer shown in the columns of "Raw material polyester" and "Polyfunctional component" in Tables 1 and 2 was added in addition to the dicarboxylic acid component (terephthalic acid) and diol component (ethylene glycol) in the raw materials composition. Here, the amount is represented in unit of mole percent with respect to the total moles of the dicarboxylic acid component and the diol component.

The reaction products thus obtained were cut to produce pellets of a polyester resin in substantially the same manner as that in the raw material polyester 1. Subsequently, the thus obtained polyester pellets were subjected to solid-phase polymerization under substantially the same conditions in the raw material polyester 1 to obtain raw material polyesters 6 to 17.

The resulting raw material polyesters 6 to 17 had an intrinsic viscosity IV=0.78 and a terminal carboxyl group concentration AV=15 eq/ton.

The abbreviations of "TMA", "BTC", "EPC", "CHC", "THB" and "PE" in Tables 1 and 2 are referred to as the following.

TMA: trimellitic acid, trifunctional carboxylic acid
BTC: benzene tetracarboxylic acid, tetrafunctional carboxylic acid
EPC: ethane pentacarboxylic acid, pentafunctional carboxylic acid
CHC: cyclohexane hexacarboxylic acid, hexafunctional carboxylic acid
THB: trihydroxybenzene, trifunctional polyol
PE: pentaerythritol, tetrafunctional polyol.

[Example 1]

<Production of polyester sheet>

- Extruding step -

Raw material polyester 1 was dried to a moisture content of 20ppm or less and introduced into a hopper of a monoaxial kneading extruder having a diameter of 50mm. Raw material polyester 1 was melted at 280°C and extruded from a die through a gear pump and a filter (pore diameter: 20μm), under the following extrusion conditions. In addition, dimensions of slits of the die were adjusted such that the thickness of a polyester sheet was 4mm. The thickness of a polyester sheet was measured by an automatic thickness meter installed at the outlet of a cast drum.

The extrusion conditions of a molten resin: pressure change of 1% and a temperature distribution of a molten resin of 2%, the molten resin was extruded from a die. Specifically, a back pressure was pressurized 1% higher relative to an average pressure in the barrel of the extruder, and the piping temperature of the extruder was heated to a temperature 2% higher than an average temperature in the barrel of the extruder.

Further, 10mg of a resin was sampled from the molten resin extruded from a die, and a crystallization temperature on cooling (Tc) and the half-value width of a crystallization temperature on cooling (Tc) were measured using a DSC apparatus according to the above-described method. Tc was 180°C and the half-value width of Tc was 35°C.

- Cooling step -

The molten resin was extruded on a cooling cast drum and was brought into close contact with the cooling cast drum using an electrostatic application method.

For cooling of the molten resin, the temperature of the cooling cast drum was set to 25°C, and cold air at 25°C was ejected to the molten resin at an air velocity of 60m/sec from a cold air generator provided opposite to the cooling cast drum, whereby the surface temperature of polyester was lowered at a cooling rate of 450°C/min.

In addition, the cooling rate was calculated as follows. From when the molten polyester (molten resin) was extruded on the cooling cast drum to when the polyester was cooled and peeled from the cooling cast drum, the surface temperature of the polyester was measured at intervals of 5 seconds, a temperature simulation of the sheet inside was carried out based on the surface temperature thus measured, and the longest time taken for a lowering of the temperature from 220°C to 120°C was calculated and converted into a velocity.

When the cooled polyester reached the surface temperature (TL) of 70°C, the polyester was peeled from the cooling cast drum, using a peeling roll disposed opposite to the cooling cast drum.

In addition, the peeling roll used was a roll which has a dimension of D1/D2 of 6.3 when a roll diameter of the cooling cast drum is taken as D1 and a roll diameter of the peeling roll is taken as D2.

In this manner, polyester sheet 1 having a thickness of 4mm was obtained.

<Evaluation of crystallization inhibition>

The crystallization-inhibiting property of polyester sheet 1 was evaluated from the crystallization degree of polyester sheet 1.

The crystallization degree of polyester sheet 1 was calculated according to the following equation, based on dA=1.335, a density of polyester when it is completely amorphous, dC=1.501, a density of polyester when it is completely crystalline, and d, a density of polyester sheet 1.

$$\text{Crystallization degree(\%)} = \{(d-dA)/(dC-dA)\} \times 100$$

The results are shown in Table 1.
An acceptable range of crystallization-inhibiting property is 30% or less.

<Production of polyester film>

The resulting polyester sheet 1 was subjected to biaxial stretching according to the following sequential stretching procedure and coating a coating solution onto the stretched polyester sheet, and a polyester film having a thickness of 300μm was obtained. The coating was conducted to execute immediately after the stretching of the polyester sheet.

- - Stretching -

(a) Longitudinal stretching

Polyester sheet 1 was passed through between two nip rolls having a different circumferential speed to stretch polyester sheet 1 in the longitudinal direction (conveying direction). In addition, longitudinal stretching was carried out at a preheating temperature of 80°C, a longitudinal stretching temperature of 91°C, a longitudinal stretching stress of 12MPa, and a longitudinal stretching ratio of 3.5-fold.

(b) Horizontal stretching

The longitudinally stretched polyester sheet 1 was subjected to horizontal stretching using a tenter at a horizontal stretching temperature of 140°C, a horizontal stretching stress of 15MPa, and a horizontal stretching ratio of 3.6-fold.

- Heat fixation/thermal relaxation -

Subsequently, the polyester film after being subjected to longitudinal stretching and horizontal stretching was subjected to heat fixation at a temperature of 220°C and a tension of 7.0kg/m (heat fixation time: 10 seconds). In addition, after heat fixation, the polyester film was subjected to thermal relaxation at a relaxation ratio of 3.5% by reducing a tenter width (thermal relaxation temperature: 210°C).

- Winding-

After heat fixation and thermal relaxation, both ends of the polyester film were trimmed by 20cm. Then, both ends of the polyester film were subjected to an extrusion processing (knurling) at a width of 10mm, followed by winding at a tension of 25kg/m. In this manner, a polyester film (PET film) of Example 1 having a thickness of 300μm was produced. The obtained polyester film was referred to as Polyester film 1.
The thickness of the resulting polyester film was measured using a contact-type film thickness meter (manufactured by Anritsu Corporation). 50 samples were sampled at equal spacings over 0.5 m in the longitudinal direction, and 50 samples (50 spots divided into equal parts in the width direction) were sampled at equal spacings over the entire width of film formation in the width direction. Thicknesses of these 100 samples were measured. The average thickness of these 100 samples was calculated and taken as an average thickness of the film.

- Coating -

Coating of a coating solution onto the polyester film substrate that is thus obtained Polyester film 1 was applied so that a dry thickness of the coating layer becomes 0.5 μm. The coating was applied by bar coating.

The coat layer on Polyester film 1 was specifically formed in the following manner. (i) Reflection layer and (ii) easy adhesion layer described below were formed by coating in this order onto a surface of the formed Polyester film 1.

(i) Reflection layer (colored layer)

Firstly, in the beginning, components of the following composition were mixed and dispersed for 1 hour by a DYNO-Mill type dispenser so as to prepare a pigment dispersion.

<Prescription of a pigment dispersion>
· Titanium dioxide     39.9 parts by mass

(TIPAQUIE R-780-2, manufactured by Ishihara Sangyo Kaisha Ltd., solid content 100% by mass)

· Polyvinyl alcohol     8.0 parts by mass

(PVA-105, manufactured by Kuraray Co., Ltd., solid content 10%)

· Surfactant (DEMOL EP, manufactured by Kao Corporation, solid content 25%)     0.5 parts by mass
· Distilled water     51.6 parts by mass.

Next, a coating liquid for forming a reflection layer was prepared by mixing components of the following composition using the obtained pigment dispersion.

<Prescription of a coating liquid for forming the reflection layer>
· The above pigment dispersion     71.4 parts by mass
· Aqueous polyacrylic resin dispersion     17.1 parts by mass

(Binder: JURYMER ET410, manufactured by Nihon Junyaku Co., Ltd., solid content: 30% by mass)

· Polyoxyalkylene alkyl ether     2.7 parts by mass

(NAROACTY CL95, manufactured by Sanyo Chemical Industries Ltd., solid content: 1% by mass)

· Oxazoline compound     1.8 parts by mass

(EPOCROSS WS-700, manufactured by Nippon Shokubai Co., Ltd., solid content: 25% by mass; crosslinking agent)

· Distilled water     7.0 parts by mass.

The coating liquid for forming a reflection layer obtained in the above manner was applied on the sample film by bar coating, and dried at 180 °C for 1 minute so as to form a reflection layer (dried thickness=5 $\mu$m; white layer) with an amount of applied titanium dioxide of 6.5 g/m$^2$.

(ii) Easy adhesion layer

Components of the following composition were mixed so as to prepare a coating liquid for an easy adhesion layer, and the liquid was applied on the reflection layer so that the amount of the binder applied became 0.09 g/m$^2$. Then, the liquid was dried at 180 °C for 1 minute so as to form an easy adhesion layer with a dried thickness of 1 $\mu$m.

<Composition of a coating liquid for the easy adhesion layer>
· Aqueous polyolefin resin dispersion     5.2 parts by mass

(Binder: CHEMIPEARL S75N, manufactured by Mitsui Chemicals Inc., solid content: 24% by mass)

· Polyoxyalkylene alkyl ether    7.8 parts by mass

(NAROACTY CL95, manufactured by Sanyo Chemical Industries Ltd., solid content: 1% by mass)

· Oxazoline compound    0.8 parts by mass

(EPOCROSS WS-700, manufactured by Nippon Shokubai Co., Ltd., solid content: 25% by mass)

· Aqueous silica fine particle dispersion    2.9 parts by mass

(AEROSIL OX-50, manufactured by Nippon Aerosil Co., Ltd., solid content: 10% by mass)

· Distilled water    83.3 parts by mass.

Next, on the surface of the polyester film opposite to the surface on which the reflection layer and the easy adhesion layer had been formed, the following (iii) an undercoating layer, (iv) barrier layer, and (v) antifouling layer were provided by coating sequentially from the side of the polyester film.

(iii) Undercoating layer

Components of the following composition were mixed so as to prepare a coating liquid for an undercoating layer, and the coating liquid was applied to the polyester film, and dried at 180 °C for 1 minute so as to form the undercoating layer (dried coating amount: about 0.1 g/m$^2$).

<Composition of a coating liquid for the undercoating layer>
· Polyester resin    1.7 parts by mass

(BIRONAL MD-1200, manufactured by Toyobo Co., Ltd., solid content: 17% by mass)

· Polyester resin    3.8 parts by mass

(PESRESIN A-520, manufactured by Takamatsu Oil & Fat, Co., Ltd., solid content: 30%)

· Polyoxyalkylene alkyl ether    1.5 parts by mass

(NAROACTY CL95, manufactured by Sanyo Chemical Industries, solid content: 1% by mass)

· Carbodiimide compound    1.3 parts by mass

(CARBODILITE V-02-L-2, manufactured by Nisshinbo Industries Ltd., solid content: 10% by mass)

· Distilled water    91.7 parts by mass.

(iv) Barrier layer
Subsequently, on the surface of the undercoating layer formed, a vapor deposited film of silicon oxide with a thickness of 800 Å was formed under the vapor deposition conditions below, and considered as the barrier layer.

<Vapor deposition conditions>

• Reaction gas mixing ratio (unit: slm): hexamethyl disiloxane/ oxygen gas/ helium=1/ 10/ 10

- Degree of vacuum in a vacuum chamber: $5.0 \times 10^{-6}$ mbar
- Degree of vacuum in a vapor deposition chamber: $6.0 \times 10^{-2}$ mbar
- Powder supply for a cooling · electrode drum: 20 kW
- Film transporting speed: 80 m/min.

(v) Antifouling layer

As shown in the below, coating liquids were prepared to form first and second antifouling layers, and the coating liquid for the first antifouling layer and the coating liquid for the second antifouling layer were applied on the barrier layer in this order to provide a two-layer structure of antifouling layers by coating.

<First antifouling layer>

-Preparation of a coating liquid for the first antifouling layer-

The components of the following composition were mixed to prepare a coating liquid for the first antifouling layer.

<Composition of the coating liquid>

| | |
|---|---|
| · CERANATE WSA1070 (manufactured by DIC Corporation) | 45.9 parts by mass |
| · Oxazoline compound (crosslinking agent) | 7.7 parts by mass |

(EPOCROSS WS-700, manufactured by Nippon Shokubai Co., Ltd., solid content: 25% by mass)

· Polyoxyalkylene alkyl ether     2.0 parts by mas

(NAROACTY CL95, manufactured by Sanyo Chemical Industries Ltd., solid content: 1% by mass)

| | |
|---|---|
| · Pigment dispersion used for the reflection layer | 33.0 parts by mas |
| · Distilled water | 11.4 parts by mass. |

-Formation of the first antifouling layer-

The obtained coating liquid was applied onto the barrier layer so that an amount of the binder applied became 3.0 g/m$^2$, and dried at 180 °C for 1 minute so as to form the first antifouling layer.

-Preparation of a coating liquid for the second antifouling layer-

The components of the following composition were mixed to prepare a coating liquid for the second antifouling layer.

<Composition of the coating liquid>

| | |
|---|---|
| · Fluorine binder: OBBLIGATO (manufactured by AGC Coat-Tech Co., Ltd.) | 45.9 parts by mass |
| · Oxazoline compound | 7.7 parts by mass |

(EPOCROSS WS-700, manufactured by Nippon Shokubai Co., Ltd., solid content: 25% by mass; crosslinking agent)

· Polyoxyalkylene alkyl ether     2.0 parts by mass

(NAROACTY CL95, manufactured by Sanyo Chemical Industries Ltd., solid content: 1% by mass)

| | |
|---|---|
| · Pigment dispersion prepared for the reflection layer | 33.0 parts by mass |
| · Distilled water | 11.4 parts by mass. |

-Formation of the second antifouling layer-

The prepared coating liquid for the second antifouling layer was applied onto the first antifouling layer formed on the barrier layer so that an amount of the binder applied became 2.0 g/m$^2$, and dried at 180 °C for 1 minute so as to form the second antifouling layer.

<Evaluation of resistance to climate>

Resistance to climate of the resulting polyester film (polyester film substrate) was evaluated from breaking elongation before and after a heat-moisture treatment.

Specifically, under an atmosphere after the heat-moisture treatment of the polyester film (polyester film substrate) (85°C, 80%RH), the film was subjected to a 100 hr heat-moisture treatment. Breaking elongation of the film before and after the heat-moisture treatment was measured according to the following method and evaluated from the measured value.

The polyester film was cut into 10 pieces with a size of 1cm width $\times$ 20cm in MD (film formation-flow direction) and TD (film width direction). Using a Tensilon universal tensile testing machine (RTC-1210: trade name, manufactured by Orientec Co., Ltd.), the polyester film was stretched every minute at a ratio of 20%/minute under conditions of 25°C and 60%RH, at a chuck-chuck distance of 10cm, and then breaking elongation and breaking strength were measured. Average values of 10 pieces of breaking elongation and breaking strength measured in MD and TD were calculated, and a retention rate of breaking elongation and a retention rate of breaking strength for MD and TD were calculated according to the following equation and were taken as indicators for the evaluation of hydrolysis resistance.

Breaking elongation retention rate (%) = (breaking elongation after 100 hr heat-moisture treatment/breaking elongation before heat-moisture treatment) x 100.

The results are shown in Table 1 and Table 2.

The acceptable range is 50% or greater and preferably 52% or greater.

<Adhesion evaluation>

Adhesion between a coat layer and a polyester film substrate of the Polyester film 1 provided with the coat layer (sample 1) is evaluated according to the following procedure. The results are given in Table 1 and Table 2.

(1) The sample 1 is subjected to thermal aging (heat-moisture treatment) at 85°C80%RH for 100 hours.
(2) The sample 1 after being subjected to thermal aging is taken out, and 10 cut marks are made on the surface of the easy adhesive layer side of the sample 1 in each of perpendicular and horizontal directions at intervals of 3 mm using a cutter knife, thereby making 100 squares.
(3) The sample 1 thus provided with squares on the surface is dipped in warm water at 50°C for 1 hour and withdrawn indoors at 25°C60%RH. Water on the surface of the sample 1 is removed by a cloth, and an adhesive tape (polyester adhesive tape (No. 31B) manufactured by Nitto Denko Corporation) is attached to the squares provided surface of the sample 1 and then detached in one shot in the 180° direction. In addition, withdrawal of the sample 1 from warm water and detachment of the adhesive tape are carried out within 5 minutes. That is, the evaluation of adhesion is conducted to evaluate in a wet state of the coat layer of the sample 1.
(4) Peeled squares of the coat layer are counted by visual inspection of the squares provided surface of the sample 1 and given as a "peeling rate" in Table 1 and Table 2.

[Examples 2 to 7 and Comparative Examples 1 to 6]

Polyester sheets 2 to 7 of Examples 2 to 7 and polyester sheets 101 to 106 of Comparative Examples 1 to 6 were produced in substantially the same manner as that in Production of polyester sheet 1 of Example 1, except that the extrusion conditions (pressure change, resin temperature distribution, sheet thickness) in the extruding step, the cooling conditions (air velocity of cold air, cooling rate) in the cooling step, and the peeling conditions of polyester (TL, roll diameter ratio) were changed to the conditions shown in Table 1 or Table 2.

Further, crystallization degrees of the resulting polyester sheets 2 to 7 and polyester sheets 101 to 106 were measured in substantially the same manner as that in polyester sheet 1.

Next, the breaking elongation of polyester films of Examples 2 to 7 and Comparative Examples 1 to 6 was measured to evaluate resistance to climate and adhesion of the polyester films after production of corresponding polyester films in substantially the same manner as that in Production of a polyester film of Example 1, except that polyester sheet 1 was changed to polyester sheets 2 to 7 or polyester sheets 101 to 106. The results are shown in Table 1 and Table 2.

[Examples 8 to 11]

Polyester sheets 8 to 11 of Examples 8 to 11 were produced in substantially the same manner as that in Production of polyester sheet 1 of Example 1, except that the raw material polyester 1 was changed to raw material polyesters 2 to 5, and the extrusion conditions (pressure change, resin temperature distribution, sheet thickness) in the extruding step, the cooling conditions (air velocity of cold air, cooling rate) in the cooling step, and the peeling conditions of polyester (TL, roll diameter ratio) were changed to the conditions shown in Table 1.

Further, the crystallization degrees of the resulting polyester sheets 8 to 11 were measured in substantially the same manner as that in polyester sheet 1. The results are shown in Table 1.

Next, the breaking elongation of polyester films of Examples 8 to 11 was measured to evaluate resistance to climate and adhesion of the polyester films after production of corresponding polyester films in substantially the same manner as that in Production of a polyester film of Example 1, except that polyester sheet 1 was changed to polyester sheets 8 to 11. The results are shown in Table 1.

[Examples 12 to 23]

Polyester sheets 12 to 23 of Examples 12 to 23 were produced in substantially the same manner as that in Production of polyester sheet 1 of Example 1, except that the raw material polyester 1 was changed to raw material polyesters 6 to 17.

Further, the crystallization degrees of the resulting polyester sheets 12 to 23 were measured in substantially the same manner as that in polyester sheet 1.

Next, the breaking elongation of polyester films of Examples 12 to 23 was measured to evaluate resistance to climate and adhesion of the polyester films after production of corresponding polyester films in substantially the same manner as that in Production of a polyester film of Example 1, except that polyester sheet 1 was changed to polyester sheets 12 to 23. The results are shown in Table 1.

[Examples 24 to 31]

Polyester sheets 24 to 31 of Examples 24 to 31 were produced in substantially the same manner as that in Production of polyester sheet 1 of Example 1, except that each of terminal sealing agents in the amount and kind shown in the columns of "Extruding step" and "Terminal sealing agent" in Table 2 together with the raw material polyester 1 dried to a moisture content of 20ppm or less were introduced into the hopper of the monoaxial kneading extruder in the extrusion process.

The terminal sealing agents in Table 2 are shown in detail as the following. Here, the addition amount is represented in unit of mass percent with respect to the total mass of the raw material polyester.

> (a) Carbodiimide compound: STABAXOL P100; trade name, manufactured by Rhein Chemie Co., Ltd., (shown as CI in the Table)
> (b) Epoxy compound: CARDURA E10P; trade name, manufactured by Hexion Speciality Cnemicals Co., Ltd., (shown as EP in the Table)
> (c) Oxazoline compound: EPOCROSS RPS-1005; trade name, manufactured by Nippon Shokubai Co., Ltd., solid content: 25% by mass (shown as OX in the Table).

Further, the crystallization degrees of the resulting polyester sheets 24 to 31 were measured in substantially the same manner as that in polyester sheet 1. Next, the breaking elongation of polyester films of Examples 24 to 31 was measured to evaluate resistance to climate and adhesion of the polyester films after production of corresponding polyester films in substantially the same manner as that in Production of a polyester film of Example 1, except that polyester sheet 1 was changed to polyester sheets 24 to 31. The results are shown in Table 2.

[Example 32]

Polyester sheet 32 of Example 32 were produced in substantially the same manner as that in Production of polyester sheet 15 of Example 1, except that a terminal sealing agent in the amount and kind shown in the columns of "Extruding step" and "Terminal sealing agent" in Table 2 together with the raw material polyester 9 were introduced into the hopper of the monoaxial kneading extruder in the extrusion process. The crystallization degree of the resulting polyester sheet 32 was measured in substantially the same manner as that in polyester sheet 1.

Next, the breaking elongation of polyester film of Example 32 was measured to evaluate resistance to climate and adhesion of the polyester film after production of corresponding polyester film in substantially the same manner as that in Production of a polyester film of Example 1, except that polyester sheet 1 was changed to polyester sheet 32. The results are shown in Table 2.

Table 1

| | | Raw material polyester | | | | | | | | Extruding step | | Cooling step | | | | Sheet | | | Film | | |
|---|---|---|---|---|---|---|---|---|---|---|---|---|---|---|---|---|---|---|---|---|---|
| | No. | Cat. | SPP | IV | Tc (°C) | HVW (°C) | Polyfunctional component Kind | Polyfunctional component Amount | Pres. C (%) | RTD (%) | Air velocity (m/s) | Cooling rate (°C/min) | TL (°C) | RDR D1/D2 | No. | Thick. (mm) | Cryst.D (%) | Thick. (µm) | Break. E. (%) | Adh. (%) |
| Ex. 1 | 1 | Ti | Yes | 0.78 | 180 | 35 | - | - | 1 | 2 | 60 | 450 | 70 | 6.3 | 1 | 4 | 1 | 300 | 60 | 15 |
| Ex. 2 | 1 | Ti | Yes | 0.78 | 205 | 25 | - | - | 0.7 | 1 | 60 | 450 | 70 | 6.3 | 2 | 4 | 2 | 300 | 57 | 20 |
| Ex. 3 | I | Ti | Yes | 0.78 | 215 | 50 | - | - | 1.3 | 3 | 60 | 450 | 70 | 6.3 | 3 | 4 | 3 | 300 | 53 | 17 |
| Ex. 4 | 1 | Ti | Yes | 0.78 | 180 | 35 | - | - | 1 | 2 | 30 | 550 | 70 | 6.3 | 4 | 3 | 0.5 | 250 | 50 | 15 |
| Ex. 5 | 1 | Ti | Yes | 0.78 | 180 | 35 | - | - | 1 | 2 | 70 | 360 | 70 | 6.3 | 5 | 5 | 10 | 350 | 52 | 30 |
| Ex. 6 | 1 | Ti | Yes | 0.78 | 160 | 40 | - | - | 1 | 2 | 60 | 450 | 70 | 6.3 | 6 | 4 | 2 | 300 | 58 | 20 |
| Ex. 7 | 1 | Ti | Yes | 0.78 | 180 | 35 | - | - | 1 | 2 | 60 | 450 | 70 | 8.0 | 7 | 4 | 1 | 300 | 50 | 15 |
| Ex. 8 | 2 | Ti | Yes | 0.70 | 185 | 40 | - | - | 1 | 2 | 60 | 450 | 70 | 6.3 | 8 | 4 | 3 | 300 | 51 | 17 |
| Ex. 9 | 3 | Ti | Yes | 0.90 | 165 | 50 | - | - | 1 | 2 | 60 | 450 | 70 | 6.3 | 9 | 4 | 0.5 | 300 | 52 | 15 |
| Ex. 10 | 4 | Ti/Sb | Yes | 0.78 | 180 | 50 | - | - | 1 | 2 | 60 | 450 | 70 | 6.3 | 10 | 4 | 10 | 300 | 50 | 30 |
| Ex. 11 | 5 | Ti | No | 0.65 | 220 | 50 | - | - | 1 | 2 | 60 | 450 | 70 | 6.3 | 11 | 4 | 5 | 300 | 50 | 25 |
| Ex. 12 | 6 | Ti | Yes | 0.78 | 180 | 35 | TMA | 0.04 | 1 | 2 | 60 | 450 | 70 | 6.3 | 12 | 4 | 1 | 300 | 60 | 6 |
| Ex. 13 | 7 | Ti | Yes | 0.78 | 180 | 35 | TMA | 0.05 | 1 | 2 | 60 | 450 | 70 | 6.3 | 13 | 4 | 1 | 300 | 60 | 5 |
| Ex. 14 | 8 | Ti | Yes | 0.78 | 180 | 35 | TMA | 0.025 | 1 | 2 | 60 | 450 | 70 | 6.3 | 14 | 4 | 1 | 300 | 60 | 3 |
| Ex. 15 | 9 | Ti | Yes | 0.78 | 180 | 35 | TMA | 0.15 | 1 | 2 | 60 | 450 | 70 | 6.3 | 15 | 4 | 1 | 300 | 60 | 1 |
| Ex.16 | 10 | Ti | Yes | 0.78 | 160 | 35 | TMA | 1.0 | 1 | 2 | 60 | 450 | 70 | 6.3 | 16 | 4 | 1 | 300 | 60 | 3 |
| Ex. 17 | 11 | Ti | Yes | 0.78 | 180 | 35 | TMA | 2.5 | 1 | 2 | 60 | 450 | 70 | 6.3 | 17 | 4 | 1 | 300 | 60 | 6 |
| Ex. 18 | 12 | Ti | Yes | 0.78 | 180 | 20 | TMA | 2.6 | 1 | 2 | 60 | 450 | 70 | 6.3 | 18 | 4 | 1 | 300 | 60 | 9 |
| Ex. 19 | 13 | Ti | Yes | 0.78 | 180 | 55 | BTC | 0.15 | 1 | 2 | 60 | 450 | 70 | 6.3 | 19 | 4 | 1 | 300 | 60 | 4 |
| Ex. 20 | 14 | Ti | Yes | 0.78 | 180 | 35 | EPC | 0.15 | 1 | 2 | 60 | 450 | 70 | 6.3 | 20 | 4 | 1 | 300 | 60 | 5 |
| Ex. 21 | 15 | Ti | Yes | 0.78 | 180 | 35 | CHC | 0.15 | 1 | 2 | 60 | 450 | 70 | 6.3 | 21 | 4 | 1 | 300 | 60 | 6 |
| Ex. 22 | 16 | Ti | Yes | 0.78 | 180 | 35 | THB | 0.15 | 1 | 2 | 60 | 450 | 70 | 6.3 | 22 | 4 | – | 300 | 60 | 5 |

(continued)

| | Raw material polyester | | | | | | | | Extruding step | | Cooling step | | | | Sheet | | | Film | | |
|---|---|---|---|---|---|---|---|---|---|---|---|---|---|---|---|---|---|---|---|---|
| | No. | Cat. | SPP | IV | Tc (°C) | HVW (°C) | Polyfunctional component | | Pres. C (%) | RTD (%) | Air velocity (m/s) | Cooling rate (°C/min) | TL (°C) | RDR D1/D2 | No. | Thick. (mm) | Cryst.D (%) | Thick. (µm) | Break. E. (%) | Adh. (%) |
| | | | | | | | Kind | Amount | | | | | | | | | | | | |
| Ex. 23 | 17 | Ti | Yes | 0.78 | 180 | 35 | PE | 0.15 | 1 | 2 | 60 | 450 | 70 | 6.3 | 23 | 4 | 1 | 300 | 60 | 6 |

Table 2

| | Raw material polyester | | | | | | | | Extruding step | | Cooling steps | | | | Sheet | | | Film | | |
|---|---|---|---|---|---|---|---|---|---|---|---|---|---|---|---|---|---|---|---|---|
| | No. | Cat. | SPP | IV | Tc (°C) | HVW (°C) | Polyfunctional component | | Pres. C (%) | RTD (%) | Air velocity (m/s) | Cooling rate (°C/min) | TL (°C) | RDR D1/D2 | No. | Thick. (mm) | Cryst.D (%) | Thick. (μm) | Break. E. (%) | Adh. (%) |
| | | | | | | | Kind | Amount | | | | | | | | | | | | |
| Ex. 24 | 1 | Ti | Yes | 0.78 | 180 | 35 | - | - | 1 | 2 | 60 | 450 | 70 | 6.3 | 24 | 4 | 1 | 300 | 60 | 5 |
| Ex. 25 | 1 | Ti | Yes | 0.78 | 180 | 35 | - | - | 1 | 2 | 60 | 450 | 70 | 6.3 | 25 | 4 | 1 | 300 | 60 | 3 |
| Ex. 26 | 1 | Ti | Yes | 0.78 | 180 | 35 | - | - | 1 | 2 | 60 | 450 | 70 | 6.3 | 26 | 4 | 1 | 300 | 60 | 1 |
| Ex. 27 | 1 | Ti | Yes | 0.78 | 180 | 35 | - | - | 1 | 2 | 60 | 450 | 70 | 6.3 | 27 | 4 | 1 | 300 | 60 | 3 |
| Ex. 28 | 1 | Ti | Yes | 0.78 | 180 | 35 | - | - | 1 | 2 | 60 | 450 | 70 | 6.3 | 28 | 4 | 1 | 300 | 60 | 5 |
| Ex. 29 | 1 | Ti | Yes | 0.78 | 180 | 35 | - | - | 1 | 2 | 60 | 450 | 70 | 6.3 | 29 | 4 | 1 | 300 | 60 | 8 |
| Ex. 30 | 1 | Ti | Yes | 0.78 | 180 | 35 | - | - | 1 | 2 | 60 | 450 | 70 | 6.3 | 30 | 4 | 1 | 300 | 60 | 1 |
| Ex. 31 | 1 | Ti | Yes | 0.78 | 180 | 35 | - | - | 1 | 2 | 60 | 450 | 70 | 6.3 | 31 | 4 | 1 | 300 | 60 | 1 |
| Ex. 32 | 18 | Ti | Yes | 0.78 | 180 | 35 | TMA | 0.15 | 1 | 2 | 60 | 450 | 70 | 6.3 | 32 | 4 | 1 | 300 | 60 | 0 |
| C. Ex. 1 | 1 | Ti | Yes | 0.78 | 180 | 20 | - | - | 0.3 | 0.5 | 60 | 450 | 70 | 6.3 | 101 | 4 | 20 | 300 | 40 | 30 |
| C. Ex. 2 | 1 | Ti | Yes | 0.78 | 180 | 55 | - | - | 1.7 | 4 | 60 | 450 | 70 | 6.3 | 102 | 4 | 25 | 300 | 40 | 30 |
| C. Ex. 3 | 1 | Ti | Yes | 0.78 | 180 | 35 | - | - | 1 | 2 | 70 | 300 | 75 | 6.3 | 103 | 5.5 | 40 | 300 | 30 | 30 |
| C. Ex. 4 | 1 | Ti | Yes | 0.78 | 180 | 35 | - | - | 1 | 2 | 40 | 580 | 65 | 6.3 | 104 | 2.5 | 1 | 300 | 50 | 15 |

(continued)

| | Raw material polyester | | | | | | | | Extruding step | | Cooling steps | | | | Sheet | | | Film | | |
|---|---|---|---|---|---|---|---|---|---|---|---|---|---|---|---|---|---|---|---|---|
| | No. | Cat. | SPP | IV | Tc (°C) | HVW (°C) | Polyfunctional component | | Pres. C (%) | RTD (%) | Air velocity (m/s) | Cooling rate (°C/min) | TL (°C) | RDR D1/D2 | No. | Thick. (mm) | Cryst.D (%) | Thick. (μm) | Break. E. (%) | Adh. (%) |
| | | | | | | | Kind | Amount | | | | | | | | | | | | |
| C. Ex. 5 | 1 | Ti | Yes | 0.78 | 180 | 35 | - | - | 1 | 2 | 40 | 330 | 70 | 6.3 | 105 | 4 | 30 | 300 | 40 | 30 |
| C. Ex. 6 | 1 | Ti | Yes | 0.78 | 180 | 35 | - | - | 1 | 2 | 80 | 600 | 70 | 6.3 | 106 | 3 | 1 | 250 | 45 | 15 |

In Tables 1 and 2, the abbreviation "Ex." denotes "Example number", the abbreviation "C. Ex." denotes "Comparative Example number", the abbreviation "Cat." denotes "Catalyst species", the abbreviation "SPP" denotes "Solid phase polymerization", the abbreviation "HVW" denotes "Half value width", the abbreviation "Pres. C" denotes "Pressure change", the abbreviation "RTD" denotes "Resin temperature distribution", the abbreviation "RDR" denotes "Roll diameter ratio", the abbreviation "Thick." denotes "Thickness", the abbreviation "Cryst. D" denotes "Crystallization degree", the abbreviation "Break. E." denotes "Breaking elongation", and the abbreviation "Adh." denotes "Adhesion (Peeling rate of coat layer)".

In Examples 1 to 11, a molten resin was cooled at a predetermined cooling rate, and in the cooling step of the molten resin, one of the surfaces of the molten resin was cooled with a cooling cast drum and the other surface was cooled with cold air whereby the resin could be cooled without causing a temperature difference between the resin interior and surface.

On the other hand, it is believed that when compared to polyester sheets 1 to 15 of Examples, the crystallization of polyesters was not inhibited, due to a high crystallization degree of polyester sheets 103 and 105, in Comparative Examples 3 and 5 where one of the surfaces of the molten resin was cooled with a cooling cast drum and the other surface was cooled with cold air, in substantially the same manner as that in Examples but the cooling rate was lower than 350°C/min.

In Examples 2 and 3, the half-value width of a cooling crystallization degree Tc was adjusted by changing a pressure and a resin temperature distribution. Thereby, the crystallization of the polyester was inhibited by which the polyester sheet could be uniformly cooled.

In Examples 4 and 5, the polyester sheet could be uniformly cooled by adjusting the thickness of the polyester sheet to inhibit crystallization.

On the other hand, as shown in Comparative Example 1, the crystallization degree of polyester sheet 101 of Comparative Example 1 is higher than the crystallization degree of polyester sheet 1 of Example 1, and the breaking elongation of the polyester film of Comparative Example 1 is lower than the breaking elongation of the polyester film of Example 1. This is believed to be due to the deleterious change of weather resistance unevenness, since if the half-value width of Tc is narrowed to 20°C by adjusting a back pressure in an extruder, the crystallization of polyester proceeds, which results in stretching unevenness when polyester sheet 101 is stretched.

In contrast, as shown in Comparative Example 2, it is believed that if the half-value width of Tc is broadened up to 55°C by increasing a pressure change in an extruder, the retention time of polyester in the extruder is increased and therefore the crystallization proceeds, which results in deleterious change of weather resistance unevenness due to stretching unevenness.

Further, as shown in Comparative Example 3, it is believed that if a polyester sheet is made thick, the cooling rate of a molten resin is decreased and therefore the crystallization proceeds, which results in deleterious change of weather resistance unevenness due to stretching unevenness.

On the other hand, if the thickness of a polyester sheet is made thin (Comparative Example 4), the cooling rate is high and there is no occurrence of stretching unevenness, but a sheet is thin, which results in poor electrical insulation property, and therefore the sheet cannot be used in back sheets for solar cells.

With regard to Comparative Example 5, it is believed that, in the cooling step of the molten resin, the cooling rate is low due to a low air velocity, and therefore the crystallization proceeds. This is believed to result in the occurrence of stretching unevenness and the deleterious change of weather resistance.

With regard to Comparative Example 6, since the air velocity is excessively high although the cooling rate is high, the molten resin is vibrated by cold air, thus resulting in unevenness of thickness. It is believed that unevenness of thickness resulted in the occurrence of stretching unevenness and the deleterious change of weather resistance.

As shown from the evaluation results of Examples 12 to 32, excellent adhesion between the coat layer and the polyester film was achieved by inclusion of a polyfunctional monomer into the raw material polyester as a copolymerization component, or met-extrusion with addition of a terminal sealing agent together with the raw material polyester.

The foregoing description of the exemplary embodiments of the present invention has been provided for the purposes of illustration and description. It is not intended to be exhaustive or to limit the invention to the precise forms disclosed. The embodiments were chosen and described in order to best explain the principles of the invention and its practical applications, thereby enabling others skilled in the art to understand the invention for various embodiments and with the various modifications as are suited to the particular use contemplated. It will be obvious to those having skill in the art that many changes may be made in the above-described details of the preferred embodiments of the present invention. It is intended that the scope of the invention be defined by the following claims.

**Claims**

1. A method for producing a polyester sheet having a thickness of from 3mm to 5mm comprising the steps of:

melt-extruding a polyester having a half-value width of the crystallization temperature on cooling of from 25°C to 50°C; and

cooling the melt-extruded polyester such that the surface temperature of the polyester, measured using a radiation thermometer, is lowered at a rate of from 350°C/min to 590°C/min,

wherein the half-value width of the crystallization temperature on cooling of the polyester is measured by:

(i) setting a weighed 10mg sample of a polyester sheet in an aluminum pan, and measuring the heat flow in response to changes in temperature at a rate of temperature increase of 10°C/min from room temperature to a final temperature of 300°C, using a differential scanning calorimetry manufactured by Shimadzu Corporation;
(ii) after reaching a final temperature of 300°C, the sample is not maintained at that temperature and lowered to a final temperature of 60°C at a rate of temperature decrease of -10°C/min; and
(iii) the apex temperature of the convex-shaped exothermic peak detected during the lowering of the temperature from 300°C to 60°C is taken as the cooling crystallization temperature (Tc), and when the DSC curve is drawn by plotting the heat flow of the sample from the high-temperature side to the low-temperature side, the half-value width is defined as the temperature width between the temperature where the peak begins from the baseline of the DSC curve due to heat generation/absorption and the temperature where heat generation/absorption disappears and reaches the baseline.

2. A method according to Claim 1, wherein the half-value width of the crystallization temperature on cooling of the polyester is from 25°C to 40°C.

3. A method according to Claim 2, wherein the half-value width of the crystallization temperature on cooling of the polyester is from 30°C to 37°C.

4. A method according to any preceding claim, wherein the crystallization temperature on cooling of the polyester is from 160°C to 220°C.

5. A method according to any preceding claim, wherein the melt-extruded polyester is cooled using a cooling cast drum and peeling the cooled polyester from the cooling cast drum when its surface temperature satisfies the following Equation (1):

$$\text{Equation (1)} \quad Tg-10<TL<Tg$$

wherein, in Equation (1), TL represents the surface temperature of the cooled polyester, and Tg represents the glass transition temperature (°C) of the polyester measured by setting a weighed 10mg sample of a polyester sheet in an aluminum pan, and measuring the heat flow in response to changes in temperature at a rate of temperature increase of 10°C/min from room temperature to a final temperature of 300°C using a differential scanning calorimetry (DSC) apparatus, the temperature at which the DSC curve is bent being taken as the glass transition temperature.

6. A method according to Claim 5, wherein the melt-extruded polyester is cooled using a cooling cast drum and peeling the cooled polyester from the cooling cast drum when its surface temperature satisfies Tg-5<TL<Tg.

7. A method according to Claim 5 or Claim 6, wherein the peeling of the cooled polyester from the cooling cast drum is carried out using a peeling roll which is disposed opposite to the cooling cast drum and has a roll diameter satisfying the following Equation (2):

$$\text{Equation (2)} \quad (D1/D2)<7$$

wherein, in Equation (2), D1 represents the roll diameter of the cooling cast drum and D2 represents the roll diameter of the peeling roll.

8. A method according to any preceding claim, wherein the polyester has an intrinsic viscosity (IV) of from 0.7 to 0.9 determined by extrapolating the value of specific viscosity ($\eta_{sp}=\eta_r-1$) divided by the concentration, which is obtained by subtracting 1 from a ratio ($\eta_r(=\eta/\eta_0$; relative viscosity) of a solution viscosity ($\eta$) and a solvent viscosity ($\eta_0$), with

respect to concentration, to a state where the concentration is zero, IV being calculated from a solution viscosity at 25°C after dissolving the polyester in a mixed solvent of 1,1,2,2-tetrachloroethane and phenol in a mass ratio of 2:3 using a Ubbelohde viscometer.

9. A method according to any preceding claim, wherein the polyester comprises catalyst-derived titanium atoms.

10. A method according to Claim 9, wherein the polyester comprises an organic chelated titanium complex.

11. A method according to any preceding claim, wherein the polyester comprises from 0.005% by mole to 2.5% by mole of a polyfunctional monomer in which the total (a+b) of the carboxylic group number (a) and the hydroxyl group number (b) is 3 or more.

12. A method according to any preceding claim, wherein the melt-extruding comprises adding from 0.1% by mass to 5% by mass of at least one terminal sealing agent selected from an oxazoline compound, a carbodiimide compound and an epoxide compound, with respect to the total mass of the polyester.

13. A method of producing a polyester film comprising:

   producing a polyester sheet by a method as defined in any preceding claim; and
   stretching the polyester sheet to produce a polyester film having a thickness of from 250 $\mu$m to 500 $\mu$m.

**Patentansprüche**

1. Verfahren zur Herstellung einer Polyesterbahn mit einer Dicke von 3 mm bis 5 mm, umfassend die Schritte:

   Schmelzextrudieren eines Polyesters mit einer Halbwertsbreite der Kristallisationstemperatur beim Kühlen von 25°C bis 50°C; und
   Kühlen des schmelzextrudierten Polyesters so, dass die Oberflächentemperatur de Polyesters, gemessen unter Verwendung eines Strahlungsthermometers, mit einer Geschwindigkeit von 350°C/min bis 590°C/min abgesenkt wird,

   worin die Halbwertsbreite der Kristallisationstemperatur beim Kühlen des Polyesters gemessen wird durch:

   (i) Einsetzen einer ausgewogenen 10 mg-Probe der Polyesterbahn in eine Aluminiumpfännchen und Messen des Wärmeflusses in Erwiderung auf Veränderungen der Temperatur bei einer Temperaturerhöhungsgeschwindigkeit von 10°C/min von Raumtemperatur bis zu einer Endtemperatur von 300°C, unter Verwendung eines dynamischen Differenz-Kalorimeters, hergestellt von Shimadzu Corporation;
   (ii) nach Erreichen der Endtemperatur von 300°C wird die Probe nicht bei dieser Temperatur gehalten und wird auf eine Endtemperatur von 60°C mit einer Temperaturverringerungsgeschwindigkeit von -10°C/min abgesenkt; und
   (iii) die Scheiteltemperatur des konvexförmigen exothermen Peaks, der während des Absenkens der Temperatur von 300°C auf 60°C detektiert wird, wird als Kühlungs-Kristallisationstemperatur (Tc) herangezogen, und wenn die DSC-Kurve durch Zeichnen des Wärmeflusses der Probe von Seite der hohen Temperatur zur Seite der niedrigen Temperatur gezogen wird, ist die Halbwertsbreite definiert als die Temperaturbreite zwischen der Temperatur, wo der Peak aufgrund der Wärmegenerierung/Absorption von der Grundlinie der DSC-Kurve beginnt, und der Temperatur, wo die Wärmegenerierung/Absorption verschwindet und die Grundlinie erreicht.

2. Verfahren gemäß Anspruch 1, worin die Halbwertsbreite der Kristallisationstemperatur beim Kühlen des Polyesters von 25°C bis 40°C beträgt.

3. Verfahren gemäß Anspruch 2, worin die Halbwertsbreite der Kristallisationstemperatur beim Kühlen des Polyesters von 30°C bis 37°C beträgt.

4. Verfahren gemäß irgendeinem vorhergehenden Anspruch, worin die Kristallisationstemperatur beim Kühlen des Polyesters von 160°C bis 220°C beträgt.

5. Verfahren gemäß irgendeinem vorhergehenden Anspruch, worin der schmelzextrudierte Polyester unter Verwendung einer kühlenden Gusstrommel gekühlt wird und der Polyester von der kühlenden Gusstrommel abgelöst wird, wenn die Oberflächentemperatur die folgende Gleichung (1) erfüllt:

$$\text{Gleichung (1)} \quad Tg-10<TL<Tg$$

worin in Gleichung (1) TL die Oberflächentemperatur des gekühlten Polyesters darstellt und Tg die Glasübergangstemperatur (°C) des Polyesters darstellt, gemessen durch Einsetzen einer ausgewogenen 10 mg-Probe der Polyesterbahn in ein Aluminiumtöpfchen und Messen des Wärmeflusses in Erwiderung auf Veränderungen der Temperatur bei einer Temperaturerhöhungsgeschwindigkeit von 10°C/min von Raumtemperatur bis zu einer Endtemperatur von 300°C unter Verwendung eines dynamischen Differenz-Kalorimeters (DSC), wobei die Temperatur, bei der die DSC-Kurve gebogen ist, als Glasübergangstemperatur angenommen wird.

6. Verfahren gemäß Anspruch 5, worin der schmelzextrudierte Polyester unter Verwendung einer kühlenden Gusstrommel gekühlt wird und der gekühlte Polyester von der kühlenden Gusstrommel abgelöst wird, wenn dessen Oberflächentemperatur Tg-5<TL<Tg erfüllt.

7. Verfahren gemäß Anspruch 5 oder Anspruch 6, worin das Ablösen des gekühlten Polyesters von der kühlenden Gusstrommel unter Verwendung einer Ablösewalze durchgeführt wird, die gegenüber zu der kühlenden Gusstrommel angeordnet ist und einen Walzendurchmesser aufweist, der die folgende Gleichung (2) erfüllt:

$$\text{Gleichung (2)} \quad (D1/D2)<7$$

worin in Gleichung (2) D1 den Walzendurchmesser der kühlenden Gusstrommel und D2 den Walzendurchmesser der Ablösewalze darstellt.

8. Verfahren gemäß irgendeinem vorhergehenden Anspruch, worin der Polyester eine Grenzviskosität (IV) von 0,7 bis 0,9 aufweist, bestimmt durch Extrapolieren des Werts der spezifischen Viskosität ($\eta_{sp}=\eta_r-1$), geteilt durch die Konzentration, welcher erhalten wird durch Abziehen von 1 von dem Verhältnis ($\eta_r(=\eta/\eta_0$; relative Viskosität) einer Lösungsviskosität ($\eta$) und einer Lösungsmittelviskosität ($\eta_0$) bezogen auf die Konzentration zu einem Zustand, worin die Konzentration null ist, worin IV berechnet wird aus einer Lösungsviskosität bei 25°C nach dem Auflösen des Polyesters in einem gemischten Lösungsmittel von 1,1,2,2-Tetrachlorethan und Phenol in einem Massenverhältnis von 2:3 unter Verwendung eines Ubbelohde-Viskosimeters.

9. Verfahren gemäß irgendeinem vorhergehenden Anspruch, worin der Polyester aus einem Katalysator erhaltene Titanatome enthält.

10. Verfahren gemäß Anspruch 9, worin der Polyester einen organisch chelatierten Titankomplex umfasst.

11. Verfahren gemäß irgendeinem vorhergehenden Anspruch, worin der Polyester von 0,005 mol% bis 2,5 mol% eines polyfunktionellen Monomers umfasst, worin die Gesamtheit (a+b) der Carbonsäuregruppenzahl (a) und der Hydroxylgruppenzahl (b) 3 oder mehr beträgt.

12. Verfahren gemäß irgendeinem vorhergehenden Anspruch, worin das Schmelzextrudieren das Zugeben von 0,1 bis 5 Masse% von zumindest einem terminalen Versiegelungsmittel umfasst, ausgewählt aus einer Oxazolinverbindung, eine Carbodiimidverbindung und einer Epoxidverbindung, bezogen auf die Gesamtmasse des Polyesters.

13. Verfahren zur Herstellung einer Polyesterfolie, umfassend:

Herstellen einer Polyesterbahn durch ein Verfahren, wie es in irgendeinem vorstehenden Anspruch definiert ist; und
Strecken der Polyesterbahn, um eine Polyesterfolie mit einer Dicke von 250 $\mu$m bis 500 $\mu$m herzustellen.

**Revendications**

1. Procédé de production d'une feuille de polyester ayant une épaisseur de 3 mm à 5 mm, comprenant les étapes suivantes :

   l'extrusion à l'état fondu d'un polyester présentant une largeur de demi-valeur de la température de cristallisation lors du refroidissement de 25 °C à 50 °C ; et
   le refroidissement du polyester extrudé à l'état fondu de telle manière que la température de surface du polyester, mesurée au moyen d'un thermomètre à rayonnement, diminue à raison de 350 °C/minute à 590 °C/minute,

   dans lequel la largeur de demi-valeur de la température de cristallisation lors du refroidissement du polyester est mesurée :

   (i) par le placement d'un échantillon pesé de 10 mg d'une feuille de polyester dans une cuvette en aluminium et la mesure du flux de chaleur en réponse aux changements de température à une cadence d'augmentation de la température de 10 °C/minute de la température ambiante à une température finale de 300 °C, au moyen d'un dispositif d'analyse calorimétrique à compensation de puissance fabriqué par Shimadzu Corporation ;
   (ii) après avoir atteint une température finale de 300 °C, l'échantillon n'est pas maintenu à cette température et est abaissé à une température finale de 60 °C à une cadence de diminution de la température de -10 °C/minute ; et
   (iii) la température culminante du pic exothermique convexe détecté pendant la diminution de température de 300 °C à 60 °C est prise en tant que température de cristallisation par refroidissement (Tc) et, quand la courbe DSC est obtenue en traçant le flux de chaleur de l'échantillon du côté des températures élevées au côté des températures basses, la largeur de demi-valeur est définie comme la largeur de température entre la température où le pic commence à partir de la ligne de base de la courbe DSC en raison de la génération/absorption de chaleur et la température où la génération/absorption de chaleur disparaît et atteint la ligne de base.

2. Procédé selon la revendication 1, dans lequel la largeur de demi-valeur de la température de cristallisation lors du refroidissement du polyester est de 25 °C à 40 °C.

3. Procédé selon la revendication 2, dans lequel la largeur de demi-valeur de la température de cristallisation lors du refroidissement du polyester est de 30 °C à 37 °C.

4. Procédé selon l'une quelconque des revendications précédentes, dans lequel la température de cristallisation lors du refroidissement du polyester est de 160 °C à 220 °C.

5. Procédé selon l'une quelconque des revendications précédentes, dans lequel le polyester extrudé à l'état fondu est refroidi au moyen d'un tambour de coulée de refroidissement et pelage du polyester refroidi du tambour de coulée de refroidissement quand sa température de surface satisfait à l'équation (1) suivante :

$$\text{Equation (1)} \qquad Tg - 10 < TL < Tg$$

   dans lequel , dans l'équation (1), TL représente la température de surface du polyester refroidi et Tg représente la température de transition vitreuse (°C) du polyester, mesurée par placement d'un échantillon pesé de 10 mg d'une feuille de polyester dans une cuvette en aluminium et mesure du flux de chaleur en réponse aux changements de température à une cadence d'augmentation de la température de 10 °C/minute de la température ambiante à une température finale de 300 °C, au moyen d'un appareil de calorimétrie à compensation de puissance (DSC), la température à laquelle la courbe DSC s'infléchit étant prise comme la température de transition vitreuse.

6. Procédé selon la revendication 5, dans lequel le polyester extrudé à l'état fondu est refroidi par utilisation d'un tambour de coulée de refroidissement et pelage du polyester refroidi du tambour de coulée de refroidissement quand sa température de surface satisfait à Tg - 5 < TL < Tg.

7. Procédé selon la revendication 5 ou 6, dans lequel le pelage du polyester refroidi du tambour de coulée de refroidissement est réalisé au moyen d'un rouleau de pelage qui est disposé en face du tambour de coulée de refroidissement et présente un diamètre de rouleau satisfaisant à l'équation (2) suivante :

```
Equation (2)          (D1/D2) < 7
```

dans lequel , dans l'équation (2), D1 représente le diamètre de rouleau du tambour de coulée de refroidissement et D2 représente le diamètre du rouleau de pelage.

8. Procédé selon l'une quelconque des revendications précédentes, dans lequel le polyester présente une viscosité intrinsèque (IV) de 0,7 à 0,9 déterminée en extrapolant la valeur de la viscosité spécifique ($\eta_{sp} = \eta_r - 1$) divisée par la concentration, qui est obtenue en soustrayant 1 d'un rapport $\eta_r (= \eta/\eta_0$ ; viscosité relative) d'une viscosité de solution ($\eta$) et d'une viscosité de solvant ($\eta_0$) , par rapport à la concentration, jusqu'à un état dans lequel la concentration est nulle, IV étant calculé à partir d'une viscosité de solution à 25 °C après la dissolution du polyester dans un solvant mixte contenant du 1,1,2,2-tétrachloroéthane et du phénol dans un rapport pondéral de 2 :3 en utilisant un viscosimètre d'Ubbelohde.

9. Procédé selon l'une quelconque des revendications précédentes, dans lequel le polyester comprend des atomes de titane provenant d'un catalyseur.

10. Procédé selon la revendication 9, dans lequel le polyester comprend un complexe de titane chélaté organique.

11. Procédé selon l'une quelconque des revendications précédentes, dans lequel le polyester comprend de 0,005 % en mole à 2,5 % en mole d'un monomère polyfonctionnel dans lequel le total (a+b) du nombre de groupes carboxyliques (a) et du nombre de groupes hydroxyle (b) est de 3 ou plus.

12. Procédé selon l'une quelconque des revendications précédentes, dans lequel l'extrusion à l'état fondu comprend l'ajout de 0,1 % en poids à 5 % en masse d'au moins un agent terminal d'étanchéité choisi parmi un composé d'oxazoline, un composé de carbodiimide et un composé d'époxyde, par rapport à la masse totale du polyester.

13. Procédé de production d'un film de polyester, comprenant :

la production d'une feuille de polyester par un procédé tel que défini dans l'une quelconque des revendications précédentes ; et
l'étirage de la feuille de polyester pour produire un film de polyester ayant une épaisseur de 250 $\mu$m à 500 $\mu$m.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007185898 A
- JP 2008239788 A
- JP 2000263572 A
- JP 2006335853 A
- JP 2006175764 A

- JP 2009269301 A
- US 2010063234 A
- JP 2010172333 A
- JP 2011157220 A